# EUROPÄISCHE PATENTSCHRIFT

(11) **EP 4 460 452 B1**
(45) Veröffentlichungstag und Bekanntmachung des Hinweises auf die Patenterteilung: **27.05.2026**
(21) Anmeldenummer: 22700125.2
(22) Anmeldetag: 10.01.2022
(51) Int. Cl.: B62B 1/12, A47B 3/10

(54) **VORRICHTUNG ZUM TRANSPORT EINES GEGENSTANDES**
DEVICE FOR TRANSPORTING AN OBJECT
DISPOSITIF POUR TRANSPORTER UN OBJET

(30) Priorität: 07.01.2022 AT 500022022
(43) Veröffentlichungstag der Anmeldung: 13.11.2024
(73) Patentinhaber: Leitner, Helmut, 8713 St. Stefan ob Leoben (AT); Kraker, Arnulf, 8600 Bruck an der Mur (AT)
(72) Erfinder: Leitner, Helmut, 8713 St. Stefan ob Leoben (AT); Kraker, Arnulf, 8600 Bruck an der Mur (AT)
(74) Vertreter: Wirnsberger & Lerchbaum Patentanwälte OG
(86) Internationale Anmeldenummer: PCT/AT2022/060004
(87) Internationale Veröffentlichungsnummer: WO 2023/130152

(56) Entgegenhaltungen:
- EP-A1- 0 272 797
- US-A1- 2006 157 944
- US-A1- 2011 115 198
- US-B1- 10 076 838
- US-B1- 8 439 371
- US-B1- 8 770 597

## Beschreibung

Die Erfindung betrifft eine Vorrichtung zum Transport eines Gegenstandes, insbesondere eines Werkzeugkoffers, umfassend einen Hauptkörper mit einer Rolleinheit, wobei mit dem Hauptkörper eine Auflagefläche um eine erste Schwenkachse schwenkbar verbunden ist, mit welcher Auflagefläche der Gegenstand verbindbar ist, wobei mit der Auflagefläche eine Stütze um eine zweite Schwenkachse schwenkbar verbunden ist, wobei die Vorrichtung von einer Transportstellung in eine Tischstellung bringbar ist.

Der Transport von schweren Gegenständen, insbesondere Werkzeugen oder Werkzeugkoffern, gestaltet sich oftmals als kräfteraubende Tätigkeit. Um den manuellen Transport von derartigen Gegenständen zu vereinfachen, weisen diese zumeist Griffe oder andere Tragehilfen wie Schlaufen oder Gurte auf. Soll der Transport noch weiter erleichtert werden, sind aus dem Stand der Technik Sackkarren mit Schaufeln bekannt, auf welchen die Gegenstände abgestellt werden können. Derartige Sackkarren weisen für gewöhnlich Rollen auf, sodass durch ein Kippen der Sackkarre auch schwere Gegenstände in ebenem Gelände mit mäßigem Kraftaufwand transportierbar sind. Sollen derartige Gegenstände auch in Treppenhäusern einfach transportierbar sein, kommen in der Regel sogenannte Treppenkarren oder Treppensteiger zum Einsatz. Grundsätzlich ähnelt ein Aufbau der Treppenkarre jenem der Sackkarre, jedoch sind bei Treppenkarren zumeist mehrachsige Radsterne vorgesehen. Diese drehen sich, abhängig von deren Dimensionierung, beim Passieren von Treppenstufen weiter und verringern dadurch den zum Transport des Gegenstandes benötigten Kraftaufwand erheblich.

Darüber hinaus können dem Stand der Technik auch Vorrichtungen entnommen werden, welche strukturell große Ähnlichkeiten mit oben beschriebenen Sackkarren aufweisen, jedoch von einer Transport- in eine Tischstellung gebracht werden können. In der Transportstellung können derartige Vorrichtungen analog zu herkömmlichen Sackkarren genutzt werden, wobei ein Hauptkörper zur Aufnahme des Gegenstandes dient. Im Unterschied zu herkömmlichen Sackkarren, ist bei solchen Vorrichtungen jedoch zumeist eine Auflagefläche vorgesehen, welche schwenkbar mit dem Hauptkörper verbunden ist. Durch einen Standfuß, welcher schwenkbar mit der Auflagefläche und/oder dem Hauptkörper verbunden ist, kann die Vorrichtung ähnlich einem Klapptisch in die Tischstellung gebracht werden. In der Tischstellung bieten diese Vorrichtungen dann eine Abstellmöglichkeit für den Gegenstand.

Das Dokument CN 105852407 A offenbart einen solchen Klapptisch, bei welchem metallische Standfüße schwenkbar mit einem Tischkörper verbunden sind. Ein Handgriff, mit welchem der Klapptisch ähnlich einem Trolley verfahren werden kann, weist dabei ein magnetisches Endstück auf, um diesen Handgriff in einer Tischstellung einfach an einem der Standfüße lagern zu können, sodass sich eine ästhetische Erscheinung ergibt. Weitere derartige Vorrichtungen sind aus der EP 0272797 A1 oder der US 8,770,597 B1 bekannt.

Aus den bekannten Vorrichtungen des Standes der Technik ergibt sich somit der Nachteil, dass ein Wechsel von der Transport- in die Tischstellung sehr aufwendig und die Vorrichtung in der Tischstellung wenig stabil ist.

Daher ist es Aufgabe der Erfindung, eine Vorrichtung der eingangs genannten Art bereitzustellen, bei welcher die Nachteile des Standes der Technik vermieden oder zumindest verringert sind.

Diese Aufgabe wird erfindungsgemäß durch die Merkmale von Anspruch 1 gelöst. Dabei ist ein Verbindungsteil um eine dritte Schwenkachse schwenkbar mit der Stütze verbunden, wobei das Verbindungsteil über einen am Hauptkörper vorgesehenen Koppelpunkt mit dem Hauptkörper koppelbar ist, um die Vorrichtung in der Tischstellung zu stabilisieren. Bevorzugte Ausführungen der Erfindung ergeben sich aus den abhängigen Ansprüchen.

Ein mit einer erfindungsgemäßen Vorrichtung erzielter Vorteil ist darin zu sehen, dass in der Tischstellung ein unbeabsichtigtes Zusammenklappen der Vorrichtung verhindert und die Vorrichtung in der Tischstellung stabilisiert ist. Hierzu weist die Vorrichtung mehrere Bauteile, insbesondere aber einen Hauptkörper, eine Auflagefläche, eine Stütze und ein Verbindungsteil auf.

Der Hauptkörper umfasst üblicherweise zwei parallele Seitenteile, wobei an einem oberen Ende des Hauptkörpers die erste Schwenkachse angeordnet ist. Vorzugsweise sind die Seitenteile des Hauptkörpers über Zwischenstücke verbunden, um eine Stabilität des Hauptkörpers zu erhöhen. Diese erste Schwenkachse kann durch ein oder mehrere Scharniere gebildet sein und verbindet die Auflagefläche schwenkbar mit dem Hauptkörper.

Nahe eines unteren Endes des Hauptkörpers sind vorzugsweise zwei Rolleinheiten vorgesehen, über welche die Vorrichtung in der Transportstellung besonders einfach bewegt werden kann.

Um den Gegenstand, insbesondere den Werkzeugkoffer, besonders einfach mit der Auflagefläche verbinden zu können, ist die Auflagefläche vorzugsweise als ebene Fläche ausgebildet. Zudem ist die Auflagefläche über die erste Schwenkachse schwenkbar mit dem Hauptkörper und über die zweite Schwenkachse mit der Stütze verbunden. Für gewöhnlich sind die erste Schwenkachse und die zweite Schwenkachse an gegenüberliegenden Enden der Auflagefläche positioniert.

Die Stütze umfasst zumindest einen Steher, um die Auflagefläche an einem Untergrund abstützen zu können. Alternativ kann die Stütze auch mehrere Steher umfassen, welche über Verbindungsstücke miteinander verbunden sind. Dabei kann zumindest ein Verbindungsstück mit einem Verschlussteil, insbesondere einer Schnur, versehen sein. Durch dieses Verschlussteil kann die Stütze in der Position verändert werden.

Das Verbindungsteil ist für gewöhnlich stabförmig mit rundem oder eckigem, insbesondere viereckigem, Querschnitt ausgebildet und weist an einem Ende die dritte Schwenkachse, über welche das Verbindungsteil mit der Stütze verbunden ist, und an einem anderen Ende einen Bereich auf, welcher lösbar am Koppelpunkt des Hauptkörpers fixierbar ist. Alternativ kann das Verbindungsteil auch flächig, insbesondere plattenförmig, ausgebildet sein und eine oder mehrere Öffnungen aufweisen.

Grundsätzlich wird die Vorrichtung von der Transportstellung in die Tischstellung gebracht, indem ein Moment um die erste Schwenkachse aufgebracht und die Auflagefläche relativ zum Hauptkörper geschwenkt wird. Dabei wechselt die Auflagefläche aus der Transportstellung, in welcher die Auflagefläche im Wesentlichen parallel zum Hauptkörper, vorzugsweise vertikal, orientiert ist, in die Tischstellung, in welcher die Auflagefläche im Wesentlichen parallel zum Untergrund, vorzugsweise horizontal, orientiert ist. Diese Schwenkbewegung der Auflagefläche ist unabhängig davon ausführbar, ob der Gegenstand auf der Auflagefläche fixiert ist oder nicht.

Bevorzugt wird ein Moment um die zweite Schwenkachse erst dann aufgebracht, wenn sich die Auflagefläche in der Tischstellung befindet. Dementsprechend führen Stütze und Auflagefläche beim Wechsel von der Transport- in die Tischstellung zunächst gemeinsam die Schwenkbewegung um die erste Schwenkachse und relativ zum Hauptkörper aus. Vorzugsweise sind Auflagefläche und Stütze hierbei parallel zueinander. Wird die Stütze um die zweite Schwenkachse relativ zur Auflagefläche geschwenkt, stützt diese die Auflagefläche in der Tischstellung am Untergrund ab und erhöht damit die Stabilität der Vorrichtung. Alternativ können die Schwenkbewegungen der Auflagefläche und der Stütze aber auch zeitgleich stattfinden und/oder fließend ineinander übergehen.

In der Tischstellung wird die Auflagefläche entlang der ersten Schwenkachse vom Hauptkörper und entlang der zweiten Schwenkachse von der Stütze am Untergrund abgestützt, wobei sich die Auflagefläche vorzugsweise in einer horizontalen Position und die Stütze vorzugsweise in einer vertikalen Position befinden.

Letztlich wird ein Moment um die dritte Schwenkachse aufgebracht, um das über die dritte Schwenkachse mit der Stütze verbundene Verbindungsteil mit dem Koppelpunkt des Hauptkörpers verbinden zu können. Hierbei wird das Verbindungsteil relativ zur Stütze geschwenkt und in eine im Wesentlichen horizontale Position gebracht. Entsprechend verspannt das Verbindungsteil die Stütze und den Hauptkörper gegeneinander und wirkt damit ähnlich einer Trittleiste eines Jogl- oder Rhöntisches, welche landläufig auch als "Vergeltsgott" bekannt ist. Dadurch kann ein Aufbringen von Momenten um die erste Schwenkachse und die zweite Schwenkachse verhindert, eine Stabilität der Vorrichtung erhöht und die Stütze sowie der Hauptkörper in der Tischstellung arretiert werden. Insbesondere kann durch das Verbindungsteil in der Tischstellung auch eine Schwenkbewegung verhindert werden, bei welcher sich Stütze und Hauptkörper zueinander bewegen.

Ist in der Tischstellung ein Gegenstand, insbesondere ein Werkzeugkoffer, mit der Auflagefläche verbunden, so drückt dieser mit einer Gewichtskraft auf die Auflagefläche, wobei die Gewichtskraft im Wesentlichen aus der Gravitationskraft und dem Gewicht des Gegenstandes resultiert. Da Hauptkörper und Stütze in der Tischstellung vom Verbindungsteil für gewöhnlich derart gegeneinander verspannt sind, dass die Vorrichtung eine besonders hohe Stabilität aufweist, können auch Gegenstände mit hohem Gewicht mit der Auflagefläche verbunden werden.

Bevorzugt weist die Vorrichtung in der Transportstellung eine Breite von 30 cm bis 100 cm, besonders bevorzugt von 45 cm bis 80 cm, eine Höhe von 100 cm bis 180 cm, besonders bevorzugt von 120 cm bis 160 cm, eine Tiefe von 40 cm bis 120 cm, besonders bevorzugt von 50 cm bis 100 cm auf. Durch diese Abmessungen kann die Vorrichtung auch besonders einfach auch in engen Gängen oder Treppenhäusern sowie durch herkömmliche Türöffnungen bewegt werden. Darüber hinaus kann die Vorrichtung mit derartigen Abmessungen auch in herkömmlichen bis besonders kleinen Aufzügen transportiert werden.

Mit Vorteil ist vorgesehen, dass die erste Schwenkachse, die zweite Schwenkachse und die dritte Schwenkachse im Wesentlichen parallel sind. Hierdurch ist die Vorrichtung besonders einfach von einer Transport- in eine Tischstellung bringbar. Dabei verbindet jede Schwenkachse zwei Bauteile der Vorrichtung miteinander und ermöglicht eine relative Schwenkbewegung dieser Bauteile zueinander. Durch die parallele Anordnung der Schwenkachsen können die unterschiedlichen Bauteile der Vorrichtung wahlweise nacheinander oder zeitgleich geschwenkt werden. Entsprechend kann die Vorrichtung auch in einer fließenden Bewegung von der Transport- in die Tischstellung gebracht werden.

Vorzugsweise sind die Schwenkachsen durch Scharniere, insbesondere Beschläge, Klappenscharniere oder gerollte Scharniere, definiert. Zudem kann eine Schwenkachse auch durch mehrere Scharniere, welche entlang der Schwenkachse axial beabstandet angeordnet sind, definiert sein, wobei in der Regel zwei Scharniere vorgesehen sind. Zwar können die Scharniere sowohl trennbar als auch untrennbar ausgebildet sein, jedoch wird der Einsatz von untrennbaren Scharnieren bevorzugt. Dadurch kann ein unbeabsichtigtes Trennen der Scharniere vermieden und die Stabilität der Vorrichtung verbessert werden.

Es hat sich bewährt, dass die Auflagefläche und der Gegenstand korrespondierende, vorzugsweise zulaufende, Schienen aufweisen, wobei jene des Gegenstandes in jene der Auflagefläche einschiebbar sind, um den Gegenstand lösbar auf der Auflagefläche zu fixieren, insbesondere formschlüssig. Dadurch kann der Gegenstand besonders zeitsparend und einfach mit der Auflagefläche verbunden werden. Für gewöhnlich weisen derartige Schienen korrespondierende Querschnitte auf, um ein weitestgehend spielfreies Ineinanderschieben der Schienen sicherzustellen. Dabei ist eine Schiene mit einer Nut versehen und die korrespondierende Schiene mit einer bevorzugt komplementär ausgebildeten Feder, wobei unter dem Begriff Feder auch ein Zapfen verstanden werden kann. Zum Erzielen der vorgesehenen Wirkung ist es unerheblich, ob die auf der Auflagefläche angeordneten Schienen mit Nuten oder Federn ausgebildet sind, solange alle Schienen der Auflagefläche derselben Art sind. Für gewöhnlich sind die Schienen aus Metall, insbesondere Aluminium, gefertigt.

Zweckmäßigerweise weisen die mit der Nut versehenen Schienen einen T-, U- oder L-förmigen Querschnitt auf, um eine Bewegung des Gegenstandes normal zur Auflagefläche zu begrenzen. Vorzugsweise sind die Schienen der Auflagefläche zulaufend und gleichmäßig von einer gedachten Mittellinie der Auflagefläche beabstandet angeordnet und mit Nuten versehen. Hierbei sind die Nuten der Schienen zur gedachten Mittellinie der Auflagefläche hin orientiert. Zudem hat es sich bewährt, dass die Schienen zumindest teilweise von einer Oberfläche der Auflagefläche hervorragen. Die Schienen des Gegenstandes sind vorzugsweise ebenfalls beabstandet von einer gedachten Mittellinie des Gegenstandes beabstandet und zulaufend angeordnet. Darüber hinaus sind diese Schienen mit Federn versehen, welche von der Mittellinie des Gegenstandes wegweisen, und formschlüssig in den Schienen der Auflagefläche aufnehmbar.

Durch die zulaufende Anordnung wird eine translatorische Bewegung des Gegenstandes entlang der gedachten Mittellinie der Auflagefläche begrenzt und damit eine Endposition definiert. Die mit Federn versehenen Schienen werden derart formschlüssig in den Nuten der korrespondierenden Schienen aufgenommen, dass diese translatorisch in nur eine Richtung verschoben werden können, um den Gegenstand wieder von der Auflagefläche zu lösen. Vorzugsweise sind Schienen in der Transportstellung entlang der Schwerkraft zulaufend orientiert, sodass der Gegenstand, insbesondere der Werkzeugkoffer, ohne weitere Befestigungsmittel mit der Auflagefläche verbunden bleibt und nur durch einen Kraftaufwand entgegen der Schwerkraft von dieser lösbar ist.

Dementsprechend kann ein Werkzeugkoffer mit Griff in einer Trageposition, wobei der Griff in der Trageposition nach oben zeigt, entlang der Schienen der Auflagefläche abgesenkt und mit der Auflagefläche verbunden werden. Dabei weist der Werkzeugkoffer auf einer Unterseite zumindest ein Scharnier auf, welches eine Schwenkachse definiert, um einen Deckel des Koffers durch eine Schwenkbewegung öffnen zu können. Das Scharnier des Werkzeugkoffers ist bevorzugt am gleichen Ende der Auflagefläche positioniert wie die zweite Schwenkachse. Hierdurch kann der Werkzeugkoffer in der Tischstellung besonders einfach geöffnet werden. Üblicherweise besteht ein Inhalt des Werkzeugkoffers aus mehreren Werkzeugen, welche durch Haltemittel, insbesondere Gummibänder und/oder Stecktaschen, innerhalb des Werkzeugkoffers lösbar befestigbar sind. Vorzugsweise sind radial zur Schwenkachse des Scharniers angeordnete Stecktaschen vorgesehen, welche Öffnungen an von der Schwenkachse entfernten Enden aufweisen. Dadurch kann der Inhalt des Werkzeugkoffers in der Transportstellung auf dieselbe Weise befestigt bleiben wie in der Trageposition.

Soll der Gegenstand in der Tischstellung mit der Auflagefläche verbunden werden, kann dieser an einem Rand der Auflagefläche aufgelegt werden, ehe die translatorische Bewegung entlang der gedachten Mittellinie der Auflagefläche erfolgt.

Alternativ können die mit Nuten versehenen Schienen an einem Ende verschlossen sein, wobei insbesondere U-, L- oder T-Nut-Schienen zum Einsatz kommen. Dadurch kann auf eine zulaufende Anordnung der Schienen verzichtet und die Endposition des Gegenstandes auf der Auflagefläche definiert werden.

Es ist vorteilhaft, wenn die Stütze eine Führung aufweist, in welcher das Verbindungsteil zumindest bereichsweise angeordnet und entlang einer Längsachse der Stütze translatorisch verschiebbar ist. Dadurch kann eine besonders stabile Tischstellung der Vorrichtung erzielt werden. Die Führung weist zumindest eine Nut zur Aufnahme des Verbindungsteils auf. Vorzugsweise umfasst die Führung zwei gegenüberliegende Nuten, zwischen welchen das Verbindungsteil positionierbar ist. Für gewöhnlich ist die Führung zweiteilig mit einem U-förmigen Querschnitt ausgebildet, wobei die beiden Teile der Führung parallel und voneinander beabstandet angeordnet sind. Bei einer zweiteiligen Führung hat es sich bewährt, dass die Nuten der Führung einander zugewandt positioniert sind.

Darüber hinaus kann das Verbindungsteil mit einem Ende in der Führung der Stütze angeordnet sein. Um eine kontrollierte translatorische Bewegung des Verbindungsteils entlang der Längsachse der Stütze ausführen können, weist das Verbindungsteil endseitig einen oder mehrere Führungsbolzen auf. Vorzugsweise ist das Verbindungsteil an einem Ende mit zwei gegenüberliegend orientierten Führungsbolzen ausgebildet, wobei jeder der Führungsbolzen in eine Nut der Führung eingreift. Zweckmäßigerweise sind die Führungsbolzen mit rundem Querschnitt ausgebildet und in den Nuten der Führung drehbar. Demnach definieren die Führungsbolzen in den Nuten der Führung die dritte Schwenkachse, über welche das Verbindungsteil relativ zur Stütze geschwenkt werden kann.

Zudem ermöglicht die translatorisch verschiebbare Anordnung des Verbindungsteils entlang der Längsachse der Stütze, das Verbindungsteil beim Koppeln mit dem Hauptkörper in eine im Wesentlichen horizontale Position zu bringen. Dadurch kann eine besonders effiziente Arretierung der Stütze und/oder des Hauptkörpers erzielt werden. Zudem basiert diese Arretierung darauf, dass der Hauptkörper und die Stütze über das Verbindungsteil gegeneinander verspannt werden.

Mit Vorteil ist vorgesehen, dass zur einfachen Handhabung der Vorrichtung an der Stütze und/oder dem Verbindungsteil ein Griff vorgesehen ist. Hierdurch ist die Vorrichtung in der Transportstellung mit besonders geringem Kraftaufwand bewegbar. In der Regel ist das Verbindungsteil endseitig mit einem Griff, insbesondere einem U- oder T-förmigen Griff, ausgebildet. Alternativ kann das Verbindungsteil aber auch flächig, insbesondere plattenförmig, ausgebildet sein und nahe einem Ende eine Öffnung aufweisen, sodass sich zwischen dem Ende und der Öffnung des Verbindungsteiles ein Griff ergibt. Ist das andere Ende des Verbindungsteils in der Führung entlang der Längsachse der Stütze translatorisch verschiebbar, so stellt das Verbindungsteil in der Transportstellung einen höhenverstellbaren Griff dar. Für den Fall, dass die Stütze keine Führung aufweist und das Verbindungsteil lediglich über die dritte Schwenkachse mit der Stütze verbunden ist, ist durch das Ende des Verbindungsteils in der Transportstellung ein am oberen Ende des Hauptkörpers positionierter Griff bereitgestellt.

Alternativ kann ein Ende der Stütze derart ausgebildet sein, dass dieses den Griff bildet. Hierbei ist das Ende der Stütze vorzugsweise U- oder T-förmig ausgebildet, sodass dieses in der Transportstellung nahe dem oberen Ende des Hauptkörpers liegt und einfach von einem Benutzer der Vorrichtung gegriffen werden kann. Darüber hinaus kann die Stütze auch aus ineinandergesteckten Rohren gebildet sein, sodass das U-förmige Ende der Stütze ausziehbar und eine Höhe des Griffs in der Transportstellung veränderbar ist.

Bevorzugt ist die Auflagefläche über einen Verschluss lösbar am Hauptkörper fixierbar, um die Auflagefläche in der Transportstellung zu halten. Hierdurch kann ein unbeabsichtigtes Schwenken der Auflagefläche in die Tischstellung verhindert werden. Dabei können sowohl am Hauptkörper als auch an der Auflagefläche Verschlusselemente zur Ausbildung einer formschlüssigen Verbindung vorgesehen sein. Vorzugsweise handelt es sich bei den Verschlusselementen um Haken und Stifte, wobei der Haken an oder in der Auflagefläche und der Stift am Hauptkörper angeordnet ist. Es hat sich bewährt, dass an einer Unterseite der Auflagefläche eine Ausnehmung vorgesehen ist, in welcher der Haken drehbar angeordnet ist. Um den Haken drehen zu können, ist dieser für gewöhnlich über eine Welle mit einem Griffstück, insbesondere einem Hebel, an einer oder beiden Seiten der Auflagefläche verbunden. In dieser Ausbildungsvariante ist der Stift vorzugsweise fest am Hauptkörper befestigt. Entsprechend kann der Haken der Auflagefläche in der Transportstellung über das Griffstück oder die Griffstücke aus der Ausnehmung bewegt werden und den Stift formschlüssig aufnehmen, um eine lösbare Fixierung der Auflagefläche am Hauptkörper zu erzielen. Zweckmäßigerweise sind mehrere, insbesondere zwei gegenüberliegend angeordnete, Verschlüsse vorgesehen, um die Auflagefläche besonders zuverlässig am Hauptkörper fixieren zu können.

Alternativ kann auch ein Hakenverschluss vorgesehen sein, bei welchem an der Auflagefläche und dem Hauptkörper Haken, Ösen oder Vertiefungen vorgesehen sind. Hierbei gelangen insbesondere Spann- oder Schnappverschlüsse zur Anwendung, über welche auf besonders schnelle Weise eine Verbindung zwischen Auflagefläche und Hauptkörper herstellbar ist. Diese beiden Arten von Verschlüssen sind vor allem von Türen und Koffern bekannt.

Mit Vorteil ist die Stütze über einen Verschluss lösbar an der Auflagefläche fixierbar, um die Stütze in der Transportstellung zu halten. Dadurch kann ein unbeabsichtigtes Schwenken der Stütze in der Transportstellung verhindert werden. Der Einfachheit halber können hierzu die oben beschriebenen Verschlüsse eingesetzt werden. In einer bevorzugten Variante ist der Haken ebenfalls an der Unterseite der Auflagefläche angeordnet und über eine Welle mit einem Griffstück verbunden. Wird die Unterseite der Auflagefläche als xy-Ebene betrachtet, sind die Haken zur lösbaren Fixierung der Auflagefläche am Hauptkörper sowie jene zur lösbaren Fixierung der Stütze an der Auflagefläche vorzugsweise sowohl in x- als auch in y-Richtung voneinander beabstandet angeordnet. Dadurch sind die Verschlüsse einzeln bedienbar und der Wechsel zwischen Transport- und Tischstellung kann kontrolliert und nach einem vorgesehenen Schema ablaufen.

Es hat sich bewährt, dass das Verbindungsteil zur, vorzugsweise formschlüssigen, Koppelung mit dem Hauptkörper zumindest ein Element, insbesondere einen Vorsprung, einen Bolzen und/oder eine Vertiefung, aufweist. Hierdurch wird die Vorrichtung in der Tischstellung besonders effizient stabilisiert. Dabei erstreckt sich das Verbindungsteil in der Tischstellung zwischen der Stütze und dem Hauptkörper. Um in der Tischstellung das Aufbringen eines Momentes um die erste Schwenkachse und/oder die zweite Schwenkachse und damit einen Stabilitätsverlust der Vorrichtung zu verhindern, kann das Verbindungsteil insbesondere endseitig mit einem Element versehen sein. Dieses ist vorzugsweise als Vorsprung, Bolzen und/oder Vertiefung ausgebildet und kann am Koppelpunkt des Hauptkörpers lösbar fixiert werden. Dementsprechend ist der Koppelpunkt des Hauptkörpers korrespondierend ausgebildet und weist in der Regel eine Kante, eine Vertiefung und/oder einen Bolzen auf, um das Element des Verbindungsteils formschlüssig aufnehmen zu können. In einer bevorzugten Variante ist das Element am Griff des Verbindungsteils angeordnet und wird am Koppelpunkt formschlüssig mit dem Hauptkörper verbunden.

Zweckmäßigerweise sind eine erste Verbindungslinie zwischen der ersten Schwenkachse und der zweiten Schwenkachse, eine zweite Verbindungslinie zwischen der ersten Schwenkachse und dem Koppelpunkt, eine dritte Verbindungslinie zwischen dem Koppelpunkt und der dritten Schwenkachse sowie eine vierte Verbindungslinie zwischen der dritten Schwenkachse und der zweiten Schwenkachse in der Tischstellung im Wesentlichen in viereckiger Form angeordnet. Hierdurch kann die Tischstellung eine besonders hohe Stabilität aufweisen. Die Verbindungslinien stehen für gewöhnlich im rechten Winkel auf die jeweiligen Schwenkachsen bzw. den Koppelpunkt. In einer Seitenansicht der normal zu den Schwenkachsen und dem Koppelpunkt verlaufenden Verbindungslinien weist die Vorrichtung in der Tischstellung eine viereckige Form auf. Diese Form stellt eine hohe Stabilität der Vorrichtung in der Tischstellung sicher. Dabei können die erste Verbindungslinie entlang der Auflagefläche, die zweite Verbindungslinie entlang des Hauptkörpers, die dritte Verbindungslinie entlang des Verbindungsteils und die vierte Verbindungslinie entlang der Stütze verlaufen. Zwar können die relativen Positionen der einzelnen Bauteile von deren Formgebung abhängig sein, ein Verlauf der Verbindungslinien und die Positionen der Schwenkachsen und des Koppelpunktes bleiben jedoch in der Regel erhalten.

Vorzugsweise schließt die erste Verbindungslinie mit der zweiten Verbindungslinie in der Tischstellung einen ersten Winkel von zumindest 90 Grad ein. Entsprechend ist der an der ersten Verbindungslinie angeordnete Gegenstand in der Tischstellung besonders einfach zugänglich. In der Transportstellung sind die erste Verbindungslinie und die zweite Verbindungslinie für gewöhnlich parallel, stehen also in keinem Winkel aufeinander. Wird ein Moment um die erste Schwenkachse angelegt und die erste Verbindungslinie relativ zur zweiten Verbindungslinie geschwenkt, kann die Vorrichtung von der Transport- in die Tischstellung gebracht werden. Dabei wächst der zwischen den Verbindungslinien eingeschlossene erste Winkel, bis dieser in der Tischstellung einen Wert von zumindest 90 Grad annimmt. Entsprechend können erste, zweite, dritte und vierte Verbindungslinie in der Seitenansicht eine trapezförmige Geometrie aufweisen.

Es hat sich bewährt, dass ein Anschlag vorgesehen ist, durch welchen eine Schwenkbewegung der Auflagefläche begrenzt ist, sodass der erste Winkel maximal 135 Grad, insbesondere maximal 100 Grad, bevorzugt maximal 95 Grad, beträgt. Dieser Anschlag signalisiert auf eindeutige Weise ein Erreichen der Tischstellung. Zudem wird verhindert, dass die erste Verbindungslinie zu weit um die erste Schwenkachse geschwenkt wird. Ein zu großer erster Winkel führt in der Regel zur Instabilisierung der Vorrichtung in der Tischstellung. Durch eine Abflachung am oberen Ende des Hauptkörpers, insbesondere der Seitenteile, kann ein Anschlag geschaffen werden, mit welchem dieses Problem vermeidbar ist. Um eine Wechselwirkung zwischen Auflagefläche und Anschlag erzielen zu können, erstreckt sich die Auflagefläche vorzugsweise entlang der ersten Verbindungslinie und über die erste Schwenkachse hinaus, sodass ein Fortsatz geschaffen ist. Bevorzugt ist dieser Fortsatz integral mit der Auflagefläche ausgebildet und steht in der Transportstellung über die erste Schwenkachse und das obere Ende des Hauptkörpers hinaus. Wird die Auflagefläche nun um die erste Schwenkachse relativ zum Hauptkörper geschwenkt und weist der Hauptkörper einen derartigen Anschlag auf, wird die Schwenkbewegung der Auflagefläche durch den Anschlag begrenzt. Folglich begrenzt der Anschlag auch den ersten Winkel und legt damit die Position der Auflagefläche in der Tischstellung fest. Abhängig von einer Formgebung des Anschlages, insbesondere einem Winkel des Anschlages zum Hauptkörper, und einer Formgebung des Fortsatzes kann die Position der Auflagefläche in der Tischstellung variieren. Unabhängig der Formgebung von Anschlag und Fortsatz wird der erste Winkel aber auf maximal 135 Grad begrenzt.

Vorzugsweise sind die erste Verbindungslinie und die dritte Verbindungslinie in der Tischstellung im Wesentlichen parallel. Entsprechend kann die Stabilität der Vorrichtung in der Tischstellung erhöht sein. Hierbei werden die zweite und die vierte Verbindungslinie, welche mit der ersten Verbindungslinie über die erste Schwenkachse bzw. die zweite Schwenkachse und mit der dritten Verbindungslinie über die dritte Schwenkachse bzw. den Koppelpunkt verbunden sind, an einer Rotationsbewegung um die erste bzw. zweite Schwenkachse gehindert. Entsprechend erhöht die parallele Anordnung der ersten und dritten Verbindungslinie die Stabilität der Vorrichtung in der Tischstellung.

Bevorzugt schließt die erste Verbindungslinie mit der vierten Verbindungslinie in der Tischstellung einen zweiten Winkel von zumindest 90 Grad ein. Hierdurch wird die Tischstellung der Vorrichtung auf besonders effiziente Weise stabilisiert. Abhängig vom zweiten Winkel kann die entlang der vierten Verbindungslinie angeordnete Stütze in unterschiedlichen Winkeln mit dem Untergrund in Kontakt stehen. Sollen auf der Auflagefläche der Vorrichtung in der Tischstellung besonders schwere Gegenstände aufgenommen werden, kann der zweite Winkel zwischen Auflagefläche und Stütze vorzugsweise größer als 90 Grad sein, um eine zusätzliche Stabilisierung der Vorrichtung zu erzielen. In der Regel schließen erste und vierte Verbindungslinie einen zweiten Winkel von 90 Grad bis 135 Grad, bevorzugt 90 Grad bis 100 Grad, besonders bevorzugt 90 Grad bis 95 Grad ein.

Zweckmäßig ist es, wenn die erste Verbindungslinie kleiner als die dritte Verbindungslinie ist, sodass sich in der Tischstellung eine Trapezform der ersten Verbindungslinie, der zweiten Verbindungslinie, der dritten Verbindungslinie und der vierten Verbindungslinie ergibt. Hierdurch können in der Tischstellung der Vorrichtung besonders schwere Gegenstände aufgenommen werden. Dabei stehen die zweite Verbindungslinie und die vierte Verbindungslinie so auf die erste Verbindungslinie, dass der erste Winkel und/oder der zweite Winkel größer als 90 Grad ist. Die daraus resultierende Trapezform führt zu einer besonders hohen Stabilität der Vorrichtung in der Tischstellung. Für gewöhnlich ergibt sich die Form eines asymmetrischen Trapezes. Alternativ könnten die Schwenkachsen und der Koppelpunkt auch so angeordnet sein, dass die Verbindungslinien die Form eines symmetrischen Trapezes annehmen. In diesem Fall wären sowohl der erste Winkel als auch der zweite Winkel größer als 90 Grad. Zudem trägt die trapezförmige Anordnung der Verbindungslinien zur Stabilität der Vorrichtung bei.

Mit Vorteil ist vorgesehen, dass die dritte Schwenkachse relativ zur zweiten Schwenkachse, insbesondere entlang der vierten Verbindungslinie, translatorisch verschiebbar ist. Somit kann eine Höhe der Vorrichtung in der Transportstellung verstellt werden. Da in der Transportstellung die zweite Schwenkachse und der Koppelpunkt nebeneinanderliegen, sind erste, zweite, dritte und vierte Verbindungslinie parallel und fallen zumindest teilweise zusammen. Wird die dritte Schwenkachse translatorisch entlang der vierten Verbindungslinie verschoben, kann die dritte Verbindungslinie sowohl zur ersten Schwenkachse hin als auch von dieser weg bewegt werden. Da die dritte Schwenkachse an einem Ende der dritten Verbindungslinie positioniert ist, kann ein anderes Ende der dritten Verbindungslinie sich über die erste Schwenkachse hinaus erstrecken.

Es hat sich bewährt, dass zumindest eine erste Gasdruckfeder vorgesehen ist, welche den Hauptkörper mit der Auflagefläche verbindet und ein Moment um die erste Schwenkachse auf die Auflagefläche aufbringt, um einen Wechsel von der Transportstellung in die Tischstellung zu unterstützen. Hierdurch kann die Vorrichtung schnell und einfach von der Transportstellung in die Tischstellung gebracht werden. Dabei ist die erste Gasdruckfeder in der Transportstellung derart vorgespannt, dass diese den Benutzer der Vorrichtung bei der Schwenkbewegung der Auflagefläche in die Tischstellung unterstützen kann. Entsprechend bringt die erste Gasdruckfeder eine Wirkungskraft auf, um die Schwenkbewegung der Auflagefläche um die erste Schwenkachse zu erleichtern. Zudem kann es von Vorteil sein, wenn die erste Gasdruckfeder so zwischen Auflagefläche und Hauptkörper angeordnet ist, dass ein Totpunkt der ersten Gasdruckfeder in der Transportstellung nicht überschritten ist. Alternativ kann die erste Gasdruckfeder aber auch so angeordnet sein, dass der Totpunkt in der Transportstellung überschritten ist und die Auflagefläche durch die erste Gasdruckfeder auch in der Transportstellung gehalten werden kann.

Darüber hinaus können zumindest zwei erste Gasdruckfedern zwischen der Auflagefläche und dem Hauptkörper angeordnet sein, um die Schwenkbewegung der Auflagefläche besonders gleichmäßig durchzuführen. Beim Einsatz von zwei ersten Gasdruckfedern, sind diese vorzugsweise parallel angeordnet und besonders platzsparend dimensioniert. Letzteres wird dadurch ermöglicht, dass dieselbe Wirkungskraft einer einzelnen Gasdruckfeder bereits durch zwei Gasdruckfedern mit jeweils der halben Wirkungskraft erzielbar ist.

Vorzugsweise sind Vorspannung und Wirkungskraft der ersten Gasdruckfeder so gewählt, dass diese die Schwenkbewegung der Auflagefläche selbsttätig ausführen kann. Dabei ist kein Kraftaufwand des Benutzers notwendig, um die Auflagefläche von der Transport- in die Tischstellung zu schwenken. Entsprechend ist die erste Gasdruckfeder so zwischen Hauptkörper und Auflagefläche angeordnet, dass deren Totpunkt in der Transportstellung nicht überschritten ist. Folglich kann die Auflagefläche in der Transportstellung über einen Verschluss, insbesondere Haken und Stift, lösbar am Hauptkörper fixiert sein. Bevorzugt wird die Auflagefläche beim Öffnen des Verschlusses automatisch von der ersten Gasdruckfeder in die Tischstellung geschwenkt. Grundsätzlich kann auch eine blockierbare erste Gasdruckfeder eingesetzt werden, welche zumindest in der Transportstellung arretierbar ist. Dadurch kann die Auflagefläche von der blockierbaren ersten Gasdruckfeder in der Transportstellung gehalten werden.

Es hat sich bewährt, dass die erste Gasdruckfeder zum Anheben der Auflagefläche samt einer daran angebrachten Masse von 1 kg bis 50 kg, bevorzugt von 5 kg bis 40 kg, besonders bevorzugt von 15 kg bis 30 kg, von einer vertikalen Stellung in eine horizontale Stellung ausgebildet ist, um die Auflagefläche von der Transportstellung in die Tischstellung zu bringen. Hierdurch kann die Vorrichtung selbst mit auf der Auflagefläche angeordnetem Gegenstand besonders einfach von der Transport- in die Tischstellung gebracht werden. Demnach ist die Wirkungskraft und Positionierung der ersten Gasdruckfeder so gewählt, dass diese die Auflagefläche samt daran angeordnetem Gegenstand, welcher eine Masse zwischen 1 kg und 50 kg aufweist, von der vertikalen in die horizontale Stellung bringen kann. Dabei ist es jedoch unerheblich, ob sich die Auflagefläche in der Transportstellung in vertikaler Stellung oder zwischen horizontaler und vertikaler Stellung befindet. Relevant ist lediglich, dass die erste Gasdruckfeder eine Wirkungskraft aufbringen kann, mit welcher die Auflagefläche samt Gegenstand von der Transport- in die Tischstellung bringbar ist.

Ist der Gegenstand ein Werkzeugkoffer, weist dieser für gewöhnlich eine Masse zwischen 5 kg und 30 kg auf, sodass ein manueller Wechsel von der Transport- in die Tischstellung einen besonders hohen Kraftaufwand erfordert. Durch die Anordnung einer derartigen ersten Gasdruckfeder zwischen der Auflagefläche und dem Hauptkörper, kann dieser Wechsel jedoch mit keinem oder besonders geringem Kraftaufwand erfolgen.

Zum Erleichtern des Wechsels von der Transport- in die Tischstellung, kann bevorzugt vorgesehen sein, dass eine zweite Gasdruckfeder zwischen der Auflagefläche und der Stütze angeordnet ist, durch welche ein Moment um die zweite Schwenkachse auf die Stütze aufbringbar ist, um ein Ausklappen der Stütze in die Tischstellung zu unterstützen. Entsprechend kann die Stütze über die zweite Gasdruckfeder um die zweite Schwenkachse geschwenkt und mit besonders geringem Kraftaufwand in die Tischstellung gebracht werden. Bevorzugt ist ein Ende der zweiten Gasdruckfeder an der Unterseite der Auflagefläche, insbesondere an der gedachten Mittellinie der Auflagefläche, und das andere Ende an einer gedachten Mittellinie der Stütze angebracht. Dabei wird die Auflagefläche bevorzugt von der ersten Gasdruckfeder in der im Wesentlichen horizontalen Tischstellung gehalten, um die Stütze frei um die zweite Schwenkachse schwenken zu können. Obgleich diese Schwenkbewegung manuell durchgeführt werden kann, ist die zweite Gasdruckfeder vorzugsweise so zwischen Stütze und Auflagefläche angeordnet, dass diese Schwenkbewegung von der zweiten Gasdruckfeder selbsttätig durchführbar ist. Hierbei kann es von Vorteil sein, wenn ein Totpunkt der zweiten Gasdruckfeder in der Transportstellung nicht überschritten ist. Entsprechend ist die zweite Gasdruckfeder bei im Wesentlichen paralleler Ausrichtung von Auflagefläche und Stütze bevorzugt vorgespannt zwischen diesen Bauteilen angeordnet. Zudem hat es sich bewährt, die parallele Ausrichtung von Auflagefläche und Stütze durch einen Verschluss, insbesondere Haken und Stift, sicherzustellen. Wird dieser Verschluss geöffnet, bringt die zweite Gasdruckfeder ein Moment um die zweite Schwenkachse und bewegt die Stütze, vorzugsweise selbsttätig, in die Tischstellung. Alternativ kann die zweite Gasdruckfeder auch so zwischen Stütze und Auflagefläche angeordnet sein, dass deren Totpunkt in der Transportstellung überschritten ist. Dabei kann die zweite Gasdruckfeder die Stütze nicht nur in der Transportstellung, sondern auch bei einem Übergang von der Transport- in die Tischstellung an der Auflagefläche halten. Ist die Stütze in der Tischstellung positioniert, kann diese über die zweite Gasdruckfeder besonders stabil in der Tischstellung gehalten werden.

Darüber hinaus können als erste Gasdruckfeder und/oder zweite Gasdruckfeder auch blockbierbare Gasdruckfedern zur Anwendung gelangen. Vorzugsweise können blockierbare Gasdruckfedern entlang des gesamten Federweges arretiert werden, wobei für gewöhnlich trotz Arretierung der Gasdruckfeder, wenn auch nur in begrenztem Ausmaß, weiterhin eine federnde Wirkung besteht. Beispielsweise kann durch Verwendung von blockierbaren Gasdruckfedern eine Arretierung der Auflagefläche bzw. der Stütze in der Transport- sowie Tischstellung erzielt werden. Dementsprechend kann in der Transportstellung gegebenenfalls auf den Einsatz von Verschlüssen zum Fixieren der Auflagefläche bzw. der Stütze verzichtet werden.

Bevorzugt ist vorgesehen, dass die Rolleinheit zumindest zwei Rollen aufweist. Hierdurch ist die Vorrichtung, insbesondere in der Transportstellung, besonders vielseitig einsetzbar. Die Rolleinheit mit zumindest zwei Rollen ist eine besonders robuste Variante, um die Vorrichtung auch auf unebenem Gelände sicher bewegen zu können. In der Regel weisen die Rollen der Rolleinheit einen Durchmesser zwischen 50 mm und 300 mm, bevorzugt zwischen 70 mm und 280 mm, besonders bevorzugt zwischen 100 mm und 200 mm auf und sind aus Metall, Kunststoff oder Holz gebildet. Dabei ist zumindest eine Rolle mit einer zentral positionierten Achse versehen und mit dem Hauptkörper verbunden, wodurch die Rolle eine Rotationsbewegung ausführen kann. Zudem kann die Rolle eine Felge mit mehreren Streben aufweisen, über welche eine Lauffläche mit der Achse in Verbindung steht. Diese Lauffläche kann glatt, mit Rillen, mit Zähnen oder einem Profil ausgebildet sein. Außerdem kann die Lauffläche aus einem anderen Material als die Rolle selbst, bevorzugt aus Kunststoff, besonders bevorzugt aus Polyurethan, gebildet sein. Die zweite Rolle weist in der Regel ebenfalls eine zentrale Achse auf, ist jedoch drehbar an der Rolleinheit gelagert. Alternativ können die Rollen auch als mit Luft gefüllte Reifen oder Vollgummireifen ausgebildet sein.

Es hat sich bewährt, dass die Rollen der Rolleinheit über zumindest ein Endloselement, insbesondere einen Riemen, verbunden sind. Dadurch ist die Vorrichtung besonders vielseitig einsetzbar. Das Endloselement erleichtert den Transport der Vorrichtung über Kanten und Vorsprünge. Hierzu sind die Rollen der Rolleinheit derart beabstandet voneinander angeordnet, dass das Endloselement zwischen diesen gespannt werden kann. Zum Abstützen des Endloselementes können zwischen den Rollen der Rolleinheit noch weitere Rollen vorgesehen sein, welche vorzugsweise einen kleineren Durchmesser als die Rollen der Rolleinheit aufweisen. Diese weiteren Rollen stützen das Endloselement in solcher Weise, dass dieses während dem Transport der Vorrichtung über eine Treppe an den Kanten von mehreren Treppenstufen gleichzeitig anliegen kann.

Alternativ können die weiteren Rollen auch als Gleitfläche, insbesondere aus Teflon, ausgebildet sein, über welche das Endloselement nahezu reibungslos bewegbar ist.

Entsprechend ist durch das Endloselement ein besonders reduzierter Kraftaufwand beim Transport der Vorrichtung über Treppen geschaffen. Für gewöhnlich ist das Endloselement aus Kunststoff, insbesondere einer Mischung unterschiedlicher Kunststoffe, gebildet.

Zweckmäßigerweise ist zum Spannen des Endloselementes eine Spanneinheit, insbesondere eine Gasdruckfeder und/oder eine Spannrolle, vorgesehen. Entsprechend ist der Kraftaufwand beim Transport der Vorrichtung über Treppen besonders gering. Das Endloselement ist zwischen den beiden Rollen der Rolleinheit gespannt, wobei optional noch weitere Rollen zum Stützen des Endloselementes vorgesehen sein können. Mit zunehmender Nutzungsdauer und/oder Materialalterung des Endloselementes, tritt häufig eine Längung des Endloselementes auf. Verglichen mit einem neuwertigen Endloselement, führt diese Längung des Endloselementes zu schlechteren Laufeigenschaften der Rolleinheit und damit zu einem erhöhten Kraftaufwand beim Transport der Vorrichtung. Um dies zu vermeiden, ist die Spanneinheit vorgesehen, welche eine gleichbleibende Spannung des Endloselementes sicherstellt und damit eine Einsatzdauer des Endloselementes verlängert. Die Spannung kann durch eine Spannrolle beeinflusst werden, welche mit dem Endloselement in Verbindung steht. Dabei ist die Spannrolle vorzugsweise federnd gelagert, sodass über eine Federkraft die Spannung des Endloselementes definiert ist. Alternativ kann die Spannung des Endloselementes durch die federnde Lagerung zumindest einer Rolle der Rolleinheit konstant gehalten werden. Hierbei wird bevorzugt eine Gasdruckfeder eingesetzt, um die Rolle und/oder die Spannrolle federnd zu lagern.

Es ist von Vorteil, wenn die Rolleinheit um eine vierte Schwenkachse schwenkbar mit dem Hauptkörper verbunden ist. Dadurch kann die Vorrichtung auch auf unebenem Gelände mit besonders geringem Kraftaufwand bewegt werden. Die Rolleinheit, welche vorzugsweise zwei voneinander beabstandete Rollen umfasst, kann durch Anlegen eines Momentes um die vierte Schwenkachse an den Untergrund angepasst werden. In der Transportstellung befindet sich die Rolleinheit in einer Ebene mit dem Hauptkörper oder parallel zu diesem. Soll die Vorrichtung über eine oder mehrere Kanten, insbesondere eine Treppe, bewegt werden, kann ein Moment um die vierte Schwenkachse angelegt werden, um die Rolleinheit aus der Ebene des Hauptkörpers auszulenken. Oftmals fällt die vierte Schwenkachse mit der Achse einer Rolle der Rolleinheit zusammen. In der Regel wird das Moment um die vierte Schwenkachse von der Gravitationskraft angelegt, sodass durch die schwenkbare Verbindung der Rolleinheit mit dem Hauptkörper jederzeit eine besonders effiziente Bodenhaftung der Rolleinheit erzielt werden kann.

Um eine maximale Auslenkung der Rolleinheit zu begrenzen, kann eine Verbindung zwischen dem Hauptkörper und der Rolleinheit vorgesehen sein. Diese Verbindung kann in Form einer Führung oder einer schwenk- und/oder verschiebbaren Strebe gegeben sein. Üblicherweise ist die Verbindung an einem Ende mit dem Hauptkörper verbunden und weist einen Führungsschlitz auf, in welchem ein Führungselement, insbesondere ein Stift, der Rolleinheit bewegbar gelagert ist. Zudem kann die Vorrichtung durch die schwenkbare Rolleinheit sowohl über Treppen mit herkömmlichen Steigungswinkeln bis 45 Grad als auch über jene mit besonders großen Steigungswinkeln von über 45 Grad bewegt werden.

Es ist günstig, wenn der Hauptkörper bodenseitig eine Schaufel aufweist, wobei ein Schwerpunkt der Vorrichtung in der Tischstellung über der Schaufel lokalisiert ist, um ein Kippen der Vorrichtung mittels der Schaufel zu verhindern. Durch die Schaufel kann die Vorrichtung beim Wechsel von der Transport- in die Tischstellung besonders effizient stabilisiert werden. Ist ein Gegenstand, insbesondere ein Werkzeugkoffer, mit gleichmäßiger Gewichtsverteilung auf der Auflagefläche angeordnet, befindet sich der Schwerpunkt der Vorrichtung in der Tischstellung im Wesentlichen mittig unterhalb der Auflagefläche. Ist keine Schaufel am Hauptkörper angeordnet, hat dies das Kippen der Vorrichtung zur Folge. Um dieses Kippen der Vorrichtung zu verhindern, ist eine Schaufel derart am Hauptkörper angeordnet, dass diese eine gedachte Vertikale überragt, auf welcher der Schwerpunkt der Vorrichtung liegt. Hierbei ist die Schaufel vorzugsweise an einem unteren Ende des Hauptkörpers positioniert und stützt die Vorrichtung während des Wechsels von der Transport- in die Tischstellung am Untergrund ab. Zudem kann die Schaufel derart zwischen den Seitenteilen des Hauptkörpers angeordnet sein, dass diese zur Stabilität des Hauptkörpers beiträgt. Es ist zweckmäßig, wenn die Schaufel aus dem gleichen Material wie der Hauptkörper gebildet ist, insbesondere aus Holz, Metall oder Kunststoff, wobei die Schaufel ein- oder mehrteilig ausgebildet sein kann. Besonders bevorzugt ist die Schaufel aus mehrschichtigen Holzfurnieren, insbesondere 3D-Furnieren, gebildet.

Vorzugsweise sind Hauptkörper, Auflagefläche, Stütze und/oder Verbindungsteil zumindest bereichsweise aus Holz, Metall oder Kunststoff gebildet. Hierdurch können Gewicht, Stabilität und Erscheinungsbild der Vorrichtung beeinflusst werden. Für gewöhnlich werden die Bauteile der Vorrichtung aus Holz gebildet, da dieses Material leicht be- und verarbeitbar ist. Entsprechend kann eine aus Holz gefertigte Vorrichtung bei gleichbleibend hoher Stabilität unterschiedlichste Erscheinungsbilder annehmen. Zudem können stark mechanisch belastete Bauteile teilweise oder vollständig aus sogenanntem Furnierschichtholz, welches im Wesentlichen aus einer Vielzahl von miteinander verleimten Furnierschichten besteht, gebildet werden. Dieses Furnierschichtholz zeichnet sich zum einen durch eine besonders hohe Stabilität und zum anderen durch besonders vielseitige Formgebungsmöglichkeiten aus, welche durch herkömmliche Formgebungsverfahren erzielbar sind. Aus Holz gefertigte Bauteile können bereichsweise mit Kunststoffbeschichtungen versehen sein, um eine Oberfläche des Bauteiles zu schützen und/oder zusätzliche funktionale Eigenschaften, wie beispielsweise eine Rutschfestigkeit der Oberfläche, zu erzielen. Bei einer aus Holz gebildeten Vorrichtung können Beschädigungen vermieden werden, welche üblicherweise bei einer Kollision mit Objekten einer Umgebung, insbesondere Einrichtungsgegenständen einer Wohnung, entstehen.

Alternativ können Bauteile der Vorrichtung aus Metall gefertigt sein, wodurch eine besonders hohe Festigkeit und besonders gute Hitzebeständigkeit erzielbar sind. Als Materialien kommen für gewöhnlich Stahl oder Aluminium zum Einsatz, da diese mit herkömmlichen Verfahren form- und bearbeitbar sind. Derartige Bauteile können mit Anstrichen oder Lackierungen versehen sein, um eine Korrosion des Metalls an der Oberfläche zu verhindern oder zu reduzieren.

Darüber hinaus können Bauteile der Vorrichtung aus Kunststoff, insbesondere Polyamid (PA) und Polyetheretherketon (PEEK), gefertigt sein. Die Kunststoffe können auch mit Glasfasern verstärkt sein, um eine besonders hohe Festigkeit zu erzielen. Dabei können die Bauteile sowohl durch herkömmliche Formverfahren wie Spritzgießen oder Rotationsformen als auch durch Bearbeitung eines Kunststoffrohlings durch Fräsen oder Laserschneiden, insbesondere CNC-Fräsen, gefertigt werden. Analog zu einer Vorrichtung aus Holz, können auch mit einer zumindest teilweise aus Kunststoff gebildeten Vorrichtung Beschädigung von Objekten der Umgebung, insbesondere Einrichtungsgegenständen einer Wohnung, verhindert oder reduziert werden.

Um eine besonders hohe Flexibilität bei einer Nutzung in der Tischstellung zu erreichen, kann vorgesehen sein, dass die Auflagefläche relativ zur ersten Schwenkachse translatorisch verschiebbar ist, vorzugsweise parallel zu einer Ebene, in welcher die erste Schwenkachse und/oder die zweite Schwenkachse liegen. Dadurch ergibt sich eine ausziehbare Tischplatte in der Tischstellung.

Bevorzugt ist vorgesehen, dass die Vorrichtung eine unter der Auflagefläche angeordnete Auflageplatte aufweist, welche durch ein Verschieben der Auflagefläche in der Tischstellung relativ zu erster Schwenkachse und zweiter Schwenkachse freigebbar ist, um eine zusätzliche Auflage zu bilden.

Beispielsweise kann die untere Auflagenplatte hierzu derart ausgebildet sein, dass diese die erste Schwenkachse und die zweite Schwenkachse verbindet. Eine Lagerung für die translatorische Verschiebbarkeit der Auflagefläche relativ zur Auflageplatte kann an der Auflageplatte oder auch am Hauptkörper vorgesehen bzw. mit der Auflageplatte oder am Hauptkörper verbunden sein. Auflageplatte und Auflagefläche bilden dann übereinander angeordnete Tischplatten, die relativ zueinander verschiebbar sind, um bei Bedarf eine besonders große Auflage zu erreichen, ohne dass ein Bauraum der Vorrichtung in der Transportstellung größer wird.

Die Auflagefläche ist bevorzugt relativ zur Auflageplatte translatorisch verschiebbar, üblicherweise entlang eines Vektors, welcher die erste Schwenkachse und die zweite Schwenkachse verbindet und welcher normal auf die erste Schwenkachse und/oder die zweite Schwenkachse ist. Dadurch ergibt sich eine Art ausziehbare Tischplatte in der Tischstellung, sodass beispielsweise ein auf der Auflagefläche positionierter Werkzeugkoffer relativ zur unter der Auflagefläche angeordneten unteren Auflageplatte verschoben werden kann und sich auf der unteren Auflageplatte eine zusätzliche vor dem Werkzeugkoffer positionierte Arbeitsfläche ergibt. Dies ermöglicht insbesondere ein Durchführen kleinerer Arbeiten vor Ort ähnlich einer Werkbank. Die Auflagefläche ist dann mittelbar über die untere Auflageplatte mit erster Schwenkachse und zweiter Schwenkachse verbunden.

Um eine unerwünschte Relativbewegung zwischen Auflagefläche und unterer Auflageplatte während eines Transports zu vermeiden, kann ein Mechanismus vorgesehen sein, durch welchen die Auflagefläche mit der unteren Auflageplatte lösbar koppelbar bzw. verriegelbar ist. Besonders bevorzugt ist vorgesehen, dass die Auflagefläche mit der unteren Auflageplatte durch die Stütze, das Verbindungsteil und/oder ein mit Stütze oder Verbindungsteil verbundenes Element lösbar verriegelbar ist, wenn sich die Vorrichtung in der Transportstellung befindet. Beispielsweise kann vorgesehen sein, dass eine Position, welche die Stütze in der Transportstellung relativ zur unteren Auflageplatte einnimmt, zwangsläufig eine Verriegelung von unterer Auflageplatte und Auflagefläche bewirkt.

Natürlich kann die Vorrichtung auch in der Weise ausgebildet sein, dass nicht die Auflagefläche samt einem gegebenenfalls daran angeordneten Werkzeugkoffer relativ zu erster Schwenkachse und zweiter Schwenkachse bzw. relativ zum Hauptkörper verschoben wird, um in der Tischstellung eine größere Auflage zu erreichen, sondern kann auch eine beispielsweise unter der Auflagefläche angeordnete Auflageplatte oder dergleichen relativ zur Auflagefläche verschiebbar sein, um sozusagen unter der Auflagefläche bzw. unter dem Werkzeugkoffer hervorgezogen werden zu können. In diesem Fall kann somit die Auflageplatte mittelbar über die oberhalb angeordnete Auflagefläche mit erster Schwenkachse und zweiter Schwenkachse sowie dem Hauptkörper verbunden sein.

Weiter versteht es sich, dass auch mehr als zwei ausziehbare Tischplatten übereinander vorgesehen sein können, welche gegebenenfalls in unterschiedliche Richtungen ausgezogen werden können, um eine besonders große Arbeitsfläche zu erreichen. Üblicherweise wird die erfindungsgemäße Vorrichtung in Verbindung mit einem entsprechenden Gegenstand, insbesondere einem Werkzeugkoffer, als Set eingesetzt, wobei der Gegenstand mit der Auflagefläche lösbar verbindbar ist. Dadurch kann der Gegenstand besonders einfach transportiert und verwendet werden. Entsprechend kann der Gegenstand sowohl in der Transport- als auch der Tischstellung auf einfache Weise mit der Vorrichtung verbunden werden. Dabei hat es sich bewährt, den Gegenstand so mit der Auflagefläche zu verbinden, dass die Vorrichtung in der Transportstellung besonders einfach gekippt werden kann. Dieser Effekt wird dadurch erzielt, dass der Schwerpunkt der Vorrichtung in der Transportstellung durch das Verbinden des Gegenstandes mit der Auflagefläche nur geringfügig verändert wird. Zudem kann der Gegenstand mit der Auflagefläche verbunden bleiben, während die Vorrichtung von der Transport- in die Tischstellung gebracht wird. Alternativ kann der Gegenstand auch auf einfache Weise von der Auflagefläche entfernt werden, bevor die Vorrichtung von der Transport- in die Tischstellung gebracht wird.

Mit Vorteil ist vorgesehen, dass der Gegenstand und die Auflagefläche mit korrespondierenden Aufnahmen versehen sind, welche vorzugsweise formschlüssig miteinander verbindbar sind. Entsprechend kann der Gegenstand besonders schnell mit der Auflagefläche verbunden werden. Dabei sind die Aufnahmen vorzugsweise als korrespondierende Schienen ausgebildet, welche auf der Oberseite der Auflagefläche und der Unterseite des Gegenstandes angeordnet sind. Die Schienen sind also bevorzugt gegengleich als T-, L- oder U-Nut-Schienen ausgebildet und so positioniert, dass diese besonders einfach ineinandergreifen können. Zudem kann die Auflagefläche mit Ausnehmungen versehen sein, deren Tiefe maximal einer halben Höhe der Schienen entspricht. Um bei einem Ineinandergreifen der Schienen einen Abstand zwischen dem Gegenstand und der Auflagefläche zu verringern, hat es sich bewährt, die Schienen in den Ausnehmungen der Auflagefläche zu positionieren. Zum Definieren der Endposition des Gegenstandes auf der Auflagefläche, sind die Schienen der Auflagefläche und des Gegenstandes bevorzugt zulaufend angeordnet.

Alternativ können die Schienen auch entlang und/oder parallel zur Mittelachse des Gegenstandes bzw. der Auflagefläche verlaufen. Dabei ist es vorteilhaft, wenn die mit der Nut versehene Schiene an einem Ende verschlossen ist, um die Endposition des Gegenstandes zu definieren.

Zweckmäßigerweise ist eine lösbare Verbindung zwischen dem Gegenstand und der Auflagefläche durch eine Translationsbewegung des Gegenstandes relativ zur Auflagefläche herstellbar. Dadurch kann der Gegenstand besonders einfach mit der Auflagefläche verbunden werden. Folglich kann der Gegenstand in der Transportstellung der Vorrichtung an der Auflagefläche angelegt und, vorzugsweise über am Gegenstand und der Auflagefläche angebrachte Aufnahmen, durch die Translationsbewegung entlang der Auflagefläche mit dieser verbunden werden. Bevorzugt sind die Auflagefläche und der Gegenstand mit zulaufend angeordneten und korrespondierenden Schienen versehen, welche bei der Translationsbewegung des Gegenstandes entlang der Auflagefläche ineinandergreifen. Dadurch wird der Gegenstand lösbar an der Auflagefläche fixiert und durch die zulaufende Anordnung der Schienen die Endposition des Gegenstandes definiert. In der Regel erfolgt das Verbinden des Gegenstandes mit der Vorrichtung in der Transportstellung, sodass vor allem ein Werkzeugkoffer besonders einfach in der Trageposition an die Auflagefläche herangeführt und mit dieser verbunden werden kann. Alternativ kann der Werkzeugkoffer auch in der Tischstellung am Rand der Auflagefläche aufgelegt und in die Endposition geschoben werden. Darüber hinaus kann der Gegenstand sowohl beim Wechsel der Vorrichtung von der Transport- in die Tischstellung als auch beim Benutzen des Gegenstandes in der Tischstellung mit der Auflagefläche verbunden bleiben.

Weitere Merkmale, Vorteile und Wirkungen der Erfindung ergeben sich aus der nachfolgenden Darstellung eines Ausführungsbeispiels. In den Zeichnungen, auf welche dabei Bezug genommen wird, zeigen:
- Fig. 1: eine perspektivische Ansicht eines ersten Ausführungsbeispiels der Vorrichtung in einer Transportstellung mit angebrachtem Gegenstand;
- Fig. 2: eine perspektivische Ansicht der Vorrichtung aus Fig. 1 in einer Tischstellung mit angebrachtem Gegenstand;
- Fig. 3: eine perspektivische Ansicht der Vorrichtung aus Fig. 1 in der Tischstellung;
- Fig. 4: eine perspektivische Ansicht der Vorrichtung aus Fig. 1 in der Transportstellung;
- Fig. 5: eine Draufsicht der Vorrichtung aus Fig. 3;
- Fig. 6: eine Schnittansicht entlang der Linie VI-VI;
- Fig. 7: eine schematische Darstellung von Verbindungslinien, Schwenkachsen und Koppelpunkt;
- Fig. 8: Details im Bereich des Koppelpunktes der Vorrichtung;
- Fig. 9: Details im Bereich der Rolleinheit der Vorrichtung;
- Fig. 10: Details im Bereich einer ersten Schwenkachse der Vorrichtung;
- Fig. 11: eine perspektivische Ansicht eines weiteren Ausführungsbeispiels der Vorrichtung in der Transportstellung;
- Fig. 12: eine perspektivische Ansicht der Vorrichtung aus Fig. 11 in der Transportstellung;
- Fig. 13 und 14: eine weitere Ausführungsform einer erfindungsgemäßen Vorrichtung.

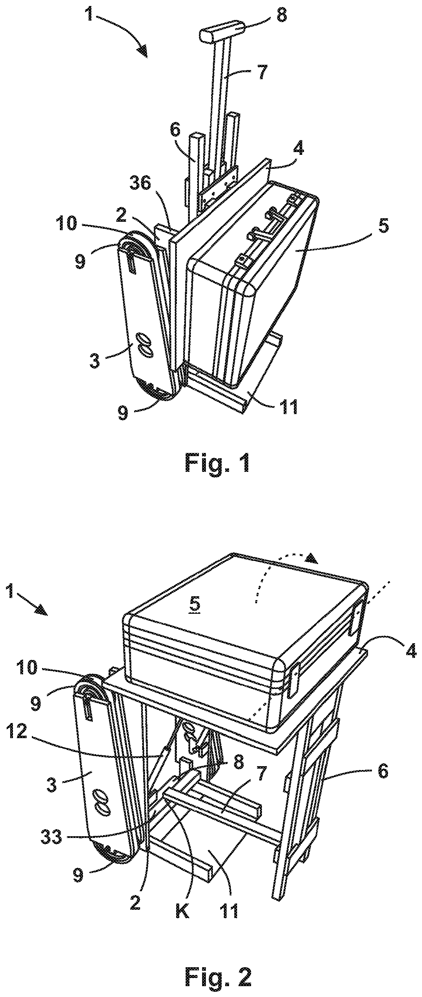

In der Fig. 1 ist eine perspektivische Ansicht eines ersten Ausführungsbeispiels der Vorrichtung 1 in einer Transportstellung mit angebrachtem Gegenstand 5 gezeigt. Bei dem Gegenstand 5 handelt es sich um einen Werkzeugkoffer mit einem Gewicht von ungefähr 20 kg. Die Vorrichtung 1 weist eine Breite von etwa 70 cm, eine Höhe von ungefähr 150 cm und eine Tiefe von 50 cm auf, wobei die Höhe über ein Verbindungsteil 7 verstellbar ist. In der Darstellung ist nicht ersichtlich, dass der Werkzeugkoffer an einer Unterseite mit zwei Schienen 14 versehen ist, welche in zwei korrespondierende Schienen 14 einer Auflagefläche 4 eingreifen, um eine lösbare Fixierung des Werkzeugkoffers an der Vorrichtung 1 zu erzielen. Die Auflagefläche 4 ist über zwei erste Scharniere 34, welche ebenfalls nicht dargestellt sind, schwenkbar mit einem Hauptkörper 2 der Vorrichtung 1 verbunden. Der Hauptkörper 2 besteht im Wesentlichen aus zwei parallel angeordneten Seitenteilen, welche über ein Zwischenstück und eine Schaufel 11 miteinander verbunden sind. Die beiden ersten Scharniere 34 sind an oberen Enden der Seitenteile angeordnet, in dieser Darstellung jedoch nicht erkennbar. Zudem weisen die Seitenteile an deren oberen Enden Anschläge 36 für die Auflagefläche 4 auf.

Außerdem ist an jedem Seitenteil des Hauptkörpers 2 eine Rolleinheit 3 angeordnet, welche zwei Rollen 9 und einen Riemen 10 umfasst. Dieser Riemen 10 verbindet die beiden Rollen 9 miteinander und vereinfacht eine Bewegung der Vorrichtung 1 in der Transportstellung. Dabei ist jene Rolle 9, welche näher am oberen Ende des Hauptkörpers 2 angeordnet ist, federnd gelagert, um eine gleichbleibende Spannung des Riemens 10 sicherzustellen. Hierzu ist im Inneren der Rolleinheit 3 eine Gasdruckfeder verborgen.

Darüber hinaus sind in der Transportstellung hinter der Auflagefläche 4 eine Stütze 6 und das Verbindungsteil 7 angeordnet. Nicht ersichtlich ist in dieser Darstellung, dass die Stütze 6 über eine zweite Schwenkachse 25 schwenkbar an einem unteren Ende der Auflagefläche 4 und das Verbindungsteil 7 über eine dritte Schwenkachse 27 schwenkbar an der Stütze 6 angeordnet ist. Allerdings kann dieser Darstellung entnommen werden, dass das Verbindungsteil 7 mit viereckigem Querschnitt ausgebildet und endseitig mit einem Griff 8 versehen ist.

Die Fig. 2 zeigt eine perspektivische Ansicht der Vorrichtung 1 aus Fig. 1 in einer Tischstellung mit angebrachtem Gegenstand 5. In der Tischstellung ist die Vorrichtung 1 ungefähr 70 cm breit, 120 cm hoch und 90 cm tief. Der Werkzeugkoffer ist dabei so angeordnet, dass an dessen Unterseite angeordnete Scharniere nahe der zweiten Schwenkachse 25 (nicht gezeigt) positioniert sind und eine Schwenkachse des Gegenstandes 5 definieren (siehe gestrichelte Linie). Um diese Schwenkachse kann ein Moment aufgebracht werden, sodass ein Deckel des Werkzeugkoffers relativ zum Körper des Werkzeugkoffers schwenkbar ist (siehe gestrichelter Pfeil). Zudem kann ein innerhalb des Werkzeugkoffers lösbar fixierter, insbesondere in Stecktaschen positionierter, Inhalt bzw. Werkzeug durch eine derartige Anordnung des Werkzeugkoffers auf der Auflagefläche 4 zum einen in der Tischstellung leicht entnommen werden und zum anderen in der Transportstellung auf einfache Weise innerhalb des Werkzeugkoffers fixiert bleiben.

Um die Vorrichtung 1 von der Transport- in die Tischstellung zu bringen, wird ein Moment um die erste Schwenkachse 24, welche durch die nicht gezeigten ersten Scharniere 34 zwischen Hauptkörper 2 und Auflagefläche 4 gebildet ist, aufgebracht und die Auflagefläche 4 relativ zum Hauptkörper 2 geschwenkt. Zu sehen sind zwei parallel angeordnete erste Gasdruckfedern 12, welche eine solche Schwenkbewegung begünstigen und gegebenenfalls sogar selbsttätig durchführen können.

Um ein Kippen der Vorrichtung 1 zu verhindern, ist die Schaufel 11 unterhalb eines Schwerpunktes der Vorrichtung 1 angeordnet und so dimensioniert, dass diese den Schwerpunkt überragt. Entsprechend kann die Schaufel 11 ein Kippen der Vorrichtung 1 bei eingeklappter Stütze 6, insbesondere bei einem Wechsel von Transport- zu Tischstellung, verhindern.

Zudem ist die Stütze 6 in der Tischstellung im Wesentlichen vertikal orientiert, um ein Ende der Auflagefläche 4 abzustützen und einen Teil der Gewichtskräfte des Gegenstandes 5 und der Auflagefläche 4 aufzunehmen. An der Stütze 6 ist auch das Verbindungsteil 7 angeordnet, welches im Wesentlichen parallel zur Auflagefläche 4 ist. Dabei kann erkannt werden, dass das Verbindungsteil 7, insbesondere dessen Griff 8, am Kopplungspunkt mit dem Hauptkörper 2 in Verbindung steht. Hierbei bilden ein Element 33 des Hauptkörpers 2 und der Griff 8 des Verbindungsteils 7 eine formschlüssige Verbindung aus, welche die Stütze 6 in der Tischstellung stabilisiert. Konkret wird durch diese Anordnung verhindert, dass in der Tischstellung durch Aufbringung eines Momentes um die zweite Schwenkachse 25, welche in dieser Darstellung nicht gezeigt ist, die Stütze 6 relativ zur Auflagefläche 4 geschwenkt werden kann. Entsprechend ist die Stütze 6 in der Tischstellung arretiert und die Vorrichtung 1 in diesem Zustand besonders stabil.

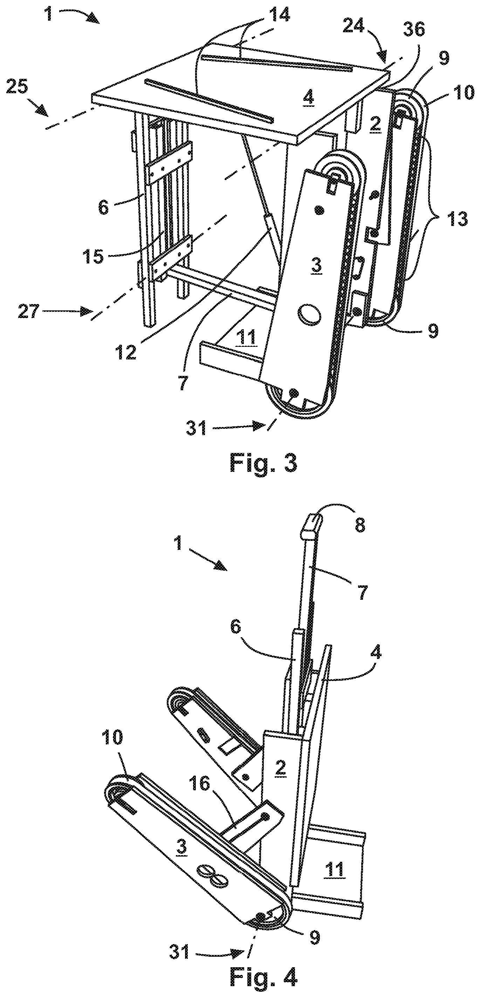

In Fig. 3 ist eine perspektivische Ansicht der Vorrichtung 1 aus Fig. 1 in der Tischstellung gezeigt. Hierbei sind die Schienen 14 der Auflagefläche 4 erkennbar, welche vorzugsweise als Nut-Schienen mit L-förmigem Querschnitt ausgebildet sind. Zusätzlich können auch Ausnehmungen in der Auflagefläche 4 vorgesehen sein, in welchen diese Schienen 14 angeordnet sind, sodass die Schienen 14 in geringerem Maße von einer Oberfläche der Auflagefläche 4 hervorstehen. Außerdem ist eine erste Schwenkachse 24 gezeigt, welche von zwei nicht dargestellten ersten Scharnieren 34 gebildet wird und über welche die Auflagefläche 4 relativ zum Hauptkörper 2 schwenkbar ist.

Darüber hinaus kann dieser Darstellung entnommen werden, dass zwischen den beiden Rollen 9 der Rolleinheit 3, zwischen welchen der Riemen 10 gespannt ist, auch noch weitere Rollen 13 angeordnet sind. Diese stützen den Riemen 10 entlang einer Lauffläche, sodass die Vorrichtung 1 auch mühelos über unebenes Gelände bewegt werden kann. Ein derartiger Aufbau der Rolleinheit 3 hat sich insbesondere zum einfachen Transport der Vorrichtung 1 über eine oder mehrere Stufen einer Treppe bewährt.

Zudem sind in dieser Ansicht Details der Stütze 6 genauer zu erkennen. Konkret weist die Stütze 6 zwei Steher auf, welche über mehrere Verbindungsstücke miteinander verbunden sind, und ist über ein nicht gezeigtes zweites Scharnier 35 mit der Auflagefläche 4 verbunden, wobei das zweite Scharnier 35 die zweite Schwenkachse 25 bildet. Zudem ist zwischen den Stehern der Stütze 6 eine Führung 15 positioniert, in welcher ein Ende des Verbindungsteils 7 angeordnet ist, wobei dieses Ende eine dritte Schwenkachse 27 bildet.

Fig. 4 zeigt eine perspektivische Ansicht der Vorrichtung 1 aus Fig. 1 in der Transportstellung. Im Unterschied zu den vorhergehenden Darstellungen ist die Rolleinheit 3 um eine Achse der Rolle 9 relativ zum Hauptkörper 2 verschwenkt, weshalb diese Achse auch als vierte Schwenkachse 31 bezeichnet werden kann. Um eine Schwenkbewegung der Rolleinheit 3 zu begrenzen, ist eine Verbindung 16 vorgesehen. Diese Verbindung 16 ist an einem Ende am Hauptkörper 2 befestigt und weist einen Führungsschlitz auf, in welchem ein Führungselement der Rolleinheit 3, insbesondere ein Stift, bewegbar gelagert ist. Dementsprechend kann die Rolleinheit 3 relativ zum Hauptkörper 2 geschwenkt werden, um beim Transport der Vorrichtung 1 auf unebenem Untergrund eine bessere Haftung zu erzielen. Insbesondere beim Transport der Vorrichtung 1 über Treppen sind mit einer derartigen Rolleinheit 3 auf einfache Weise mehrere Kontaktpunkte mit Kanten von Treppenstufen hergestellt. In dieser Darstellung wird die maximale Auslenkung zwischen Rolleinheit 3 und Hauptkörper 2 gezeigt, welche bei ca. 60 Grad liegt.

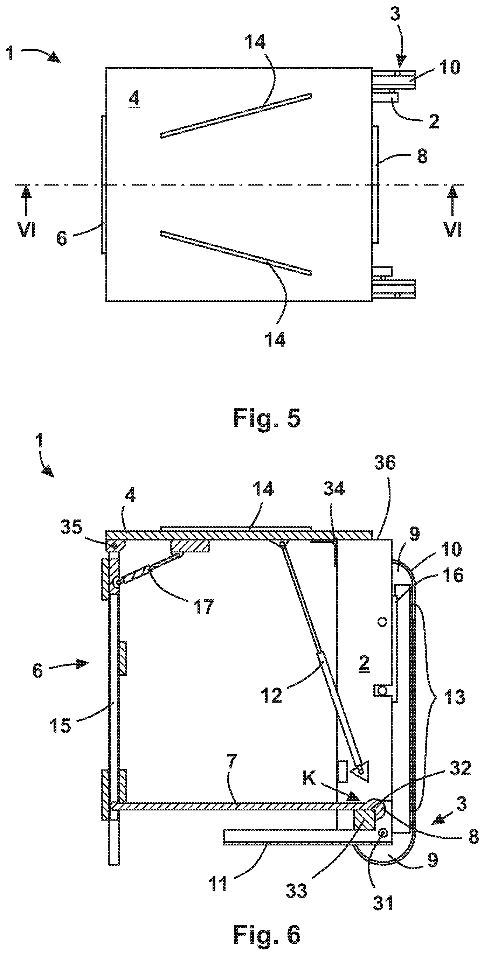

In Fig. 5 ist eine Draufsicht der Vorrichtung 1 aus Fig. 3 gezeigt. Aus dieser geht generell eine Positionierung und Proportionierung der Schienen 14 auf der Auflagefläche 4 sowie speziell deren zulaufende Anordnung in Richtung der zweiten Schwenkachse bzw. die Anordnung in Transportstellung nach unten zulaufend hervor. Außerdem ist die Positionierung des Hauptkörpers 2, der Rolleinheit 3 und der Auflagefläche 4 zueinander eindeutig erkennbar. Darüber hinaus können in dieser Darstellung auch Bereiche der Stütze 6 und des Verbindungsteils 7, insbesondere des Griffs 8, gesehen werden.

Fig. 6 zeigt einen Schnitt entlang der Linie VI-VI in Fig. 5. Hierbei werden die Positionierungen und Dimensionierungen des ersten Scharniers 34, welches den Hauptkörper 2 und die Auflagefläche 4 miteinander schwenkbar verbindet und die nicht dargestellte erste Schwenkachse 24 bildet, und des zweiten Scharniers 35, welches die Auflagefläche 4 und die Stütze 6 schwenkbar miteinander verbindet und die nicht gezeigte zweite Schwenkachse 25, erstmalig erkennbar. Am gegenüberliegenden Ende der Auflagefläche 4 wird die Schwenkbewegung durch den Anschlag 36 begrenzt.

Zudem ist ein Teil der Führung 15 zu sehen, in welchem ein Ende des Verbindungsteils 7 sowohl verschiebbar als auch schwenkbar gelagert ist. Entsprechend besteht die Führung 15 aus zwei Teilen mit U-förmigem Querschnitt, zwischen welchen das Ende des Verbindungsteils 7 aufnehmbar ist. Folglich ist das Ende des Verbindungsteils 7 mit zwei Führungsbolzen ausgestattet, welche jeweils mit einem Teil der Führung 15 wechselwirken, um das Verbindungsteil 7 entlang der Stütze 6 translatorisch verschieben zu können. Die Führungsbolzen weisen einen runden Querschnitt auf, sodass diese in der Führung 15 nicht nur translatorisch verschiebbar, sondern auch drehbar gelagert sind. Dementsprechend bilden die beiden Führungsbolzen am Ende des Verbindungsteils 7 die nicht dargestellte dritte Schwenkachse 27, welche auch translatorisch entlang der Stütze 6 verschiebbar ist. Außerdem ist ersichtlich, dass die Verbindungsstücke der Stütze 6 sowohl die Steher miteinander verbinden als auch zur Befestigung der Führung 15 dienen.

Das Verbindungsteil 7 ist in der Tischstellung im Wesentlichen parallel zur Auflagefläche 4 angeordnet und der Griff 8 an dessen Ende formschlüssig mit dem Element 33 verbindbar. Konkret weist der Griff 8 eine Vertiefung 32 auf, die im Koppelpunkt K formschlüssig mit dem Element 33 des Hauptkörpers 2 verbunden ist. Hierdurch wird die Schwenkbewegung der Stütze 6 um die nicht gezeigte zweite Schwenkachse 25, welche durch das zweite Scharnier 35 ermöglicht ist, begrenzt.

Des Weiteren ist eine der beiden ersten Gasdruckfedern 12 sowie die zweite Gasdruckfeder 17 gezeigt. Beide erste Gasdruckfedern 12 sind mit dem Hauptkörper 2 und der Auflagefläche 4 verbunden und bringen eine Wirkungskraft auf, welche die selbsttätige Schwenkbewegung der Auflagefläche 4 von der Transport- in die Tischstellung ermöglicht. Dabei ist es unerheblich, ob ein in dieser Darstellung nicht gezeigter Gegenstand 5 mit einem Gewicht von bis zu 50 kg mit der Auflagefläche 4 verbunden ist oder nicht. Die zweite Gasdruckfeder 17 ist entlang einer gedachten Mittellinie der Auflagefläche 4 und der Stütze 6 angeordnet und ermöglicht eine selbsttätige Schwenkbewegung der Stütze 6 in die Tischstellung. Diese zweite Gasdruckfeder 17 weist in der Regel eine geringere Wirkungskraft als die erste Gasdruckfeder 12 auf und kann deshalb kleiner dimensioniert sein.

In dieser Darstellung ist auch die Achse der Rolle 9 erkennbar, welche als vierte Schwenkachse 31 eine Schwenkbewegung der Rolleinheit 3 ermöglicht. Diese Schwenkbewegung wird von der Verbindung 16 beschränkt, welche ebenfalls mit dem Hauptkörper 2 verbunden und lediglich teilweise sichtbar ist.

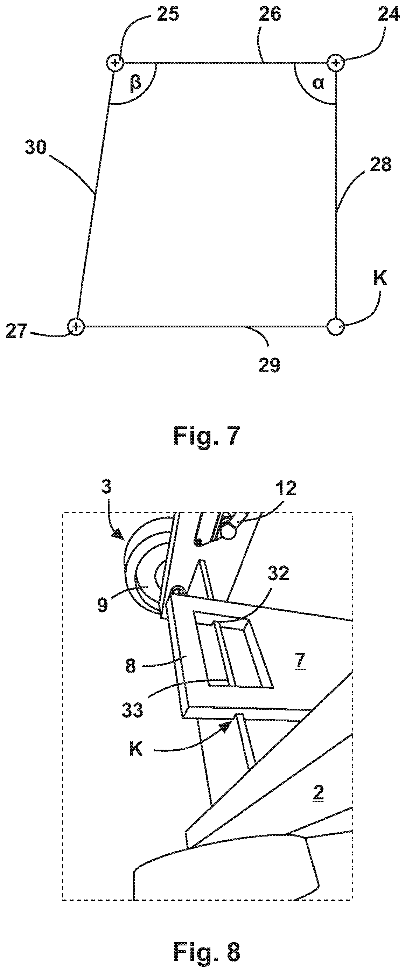

Die Fig. 7 zeigt eine schematische Darstellung von Verbindungslinien 26, 28, 29, 30, Schwenkachsen 24, 25, 27 und Koppelpunkt K. Dabei verläuft die erste Verbindungslinie 26 entlang der Auflagefläche 4, die zweite Verbindungslinie 28 entlang des Hauptkörpers 2, die dritte Verbindungslinie 29 entlang des Verbindungsteils 7 und die vierte Verbindungslinie 30 entlang der Stütze 6. Die Verbindungslinien 26, 28, 29, 30 sind im Wesentlichen trapezförmig angeordnet, wobei die Schwenkachsen 24, 25, 27 sowie der Koppelpunkt K Eckpunkte eines Trapezes darstellen. Folglich schließen erste Verbindungslinie 26 und zweite Verbindungslinie 28 einen ersten Winkel α ein, der gleich 90 Grad ist. Die erste Verbindungslinie 26 und vierte Verbindungslinie 30 schließen einen zweiten Winkel β ein, der größer als 90 Grad ist. Zudem sind die dritte Verbindungslinie 29 und die erste Verbindungslinie 26 parallel. Es ergibt sich eine Form eines asymmetrischen Trapezes. Alternativ könnten die Schwenkachsen 24, 25, 27 und der Koppelpunkt K auch so angeordnet sein, dass die Verbindungslinien 26, 28, 29, 30 die Form eines symmetrischen Trapezes annehmen. In diesem Fall wären sowohl der erste Winkel α als auch der zweite Winkel β größer als 90 Grad. In jedem Fall aber trägt die trapezförmige Anordnung der Verbindungslinien 26, 28, 29, 30, welche insbesondere durch eine Begrenzung der Schwenkbewegungen von Auflagefläche 4 und Stütze 6 über den Anschlag 36 bzw. das Verbindungsteil 7 herstellbar und durch die erste Gasdruckfeder 12 sowie die zweite Gasdruckfeder 17 stabilisierbar ist, zur Stabilität der Vorrichtung 1 bei. Die Begrenzung der Schwenkbewegung der vierten Verbindungslinie 30 um die zweite Schwenkachse 25 wird dadurch geschaffen, dass die dritte Verbindungslinie 29 die vierte Verbindungslinie 30 und die zweite Verbindungslinie 28 gegeneinander verspannt.

In Fig. 8 sind Details im Bereich des Koppelpunktes K der Vorrichtung 1 gezeigt. Dabei ist die Verbindungsstelle zwischen dem Element 33 des Hauptkörpers 2 und des Verbindungsteils 7, der sogenannte Koppelpunkt K, detailliert dargestellt. Das Verbindungsteil 7 ist in diesem Ausführungsbeispiel der Vorrichtung 1 plattenförmig ausgebildet und weist nahe eines Endbereiches eine Öffnung auf, sodass sich in diesem Bereich eine als Griff 8 nutzbare Form des Verbindungsteiles 7 ergibt. Zudem besteht das Element 33 in diesem Ausführungsbeispiel aus einem Vorsprung, welcher formschlüssig in der Vertiefung 32 des Verbindungsteils 7 aufgenommen wird. Diese Vertiefung 32 ist nahe des Griffs 8 positioniert und ermöglicht daher ein besonders einfaches Koppeln von Verbindungsteil 7 und Hauptkörper 2. Darüber hinaus sind in dieser Variante der Vorrichtung 1 zwei einfache Rollen 9 als Rolleinheiten 3 vorgesehen. Darüber hinaus ist ein Ende der ersten Gasdruckfeder 12 ersichtlich.

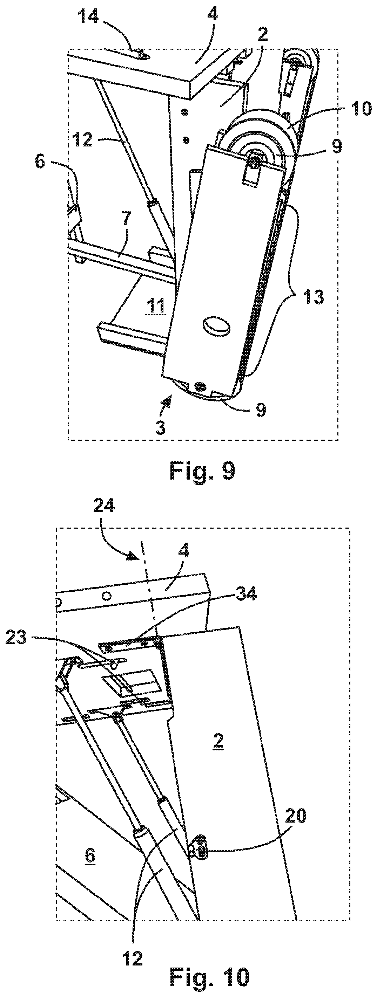

Fig. 9 zeigt Details im Bereich der Rolleinheit 3 der Vorrichtung 1. Dabei sind die weiteren Rollen 13 der Rolleinheiten 3 erkennbar, welche zwischen den Rollen 9 angeordnet sind, um den Riemen 10 gegenüber dem Untergrund abzustützen. Zudem ist eine Öffnung zum Spannen des Riemens 10 erkennbar, in welcher die Achse der Rolle 9 geführt ist. Entlang dieser Öffnung kann die Achse der Rolle 9 von einer Gasdruckfeder verschoben werden, um den Riemen 10 zu spannen. Alternativ kann die Rolle 9 auch fest verbaut sein und der Riemen 10 an einer anderen Stelle über eine Spannrolle, insbesondere eine federnd gelagerte Spannrolle, geführt werden, um eine gleichbleibende Spannung des Riemens 10 zu erzielen. Darüber hinaus ist in dieser Darstellung der Vorrichtung 1 die Schiene 14 teilweise in der Ausnehmung der Auflagefläche 4 angeordnet und eine Positionierung der Schaufel 11, des Verbindungsteils 7, der ersten Gasdruckfeder 12 und der Stütze 6 zumindest bereichsweise erkennbar.

In Fig. 10 sind Details im Bereich einer ersten Schwenkachse 24 der Vorrichtung 1 gezeigt. Hierbei ist erstmalig ein erster Stift 20 erkennbar, welcher zusammen mit einem nicht dargestellten ersten Haken einen ersten Verschluss 18 bildet. Dabei ist ein erster Stift 20 direkt am Seitenteil des Hauptkörpers 2 angeordnet. Der erste Verschluss 18 ermöglicht ein lösbares Fixieren der Auflagefläche 4 am Hauptkörper 2 in der Transportstellung. Darüber hinaus sind erstmalig zweite Haken 23 ersichtlich, welche mit nicht gezeigten zweiten Stiften jeweils einen zweiten Verschluss 21 ausbilden. Diese zweiten Haken 23 sind an einer Unterseite der Auflagefläche 4 angeordnet und ermöglichen durch Ausbildung der zweiten Verschlüsse 21 in der Transportstellung das lösbare Fixieren der Stütze 6 an der Auflagefläche 4. Sind wie im vorliegenden Fall erste Gasdruckfedern 12 und eine nicht gezeigte zweite Gasdruckfeder 17 vorgesehen, können Auflagefläche 4 und Stütze 6 durch den ersten Verschluss 18 bzw. den zweiten Verschluss 21 in der Transportstellung gehalten werden. Werden die Verschlüsse 18, 21 gelöst, wechselt die Vorrichtung 1 selbsttätig von der Transport- in die Tischstellung. Zudem ist in dieser Darstellung eine bevorzugte Ausbildung des ersten Scharniers 34 als Klappenscharnier erkennbar, wobei die Achse zwischen den beiden Teilen des ersten Scharniers 34 die erste Schwenkachse 24 bildet.

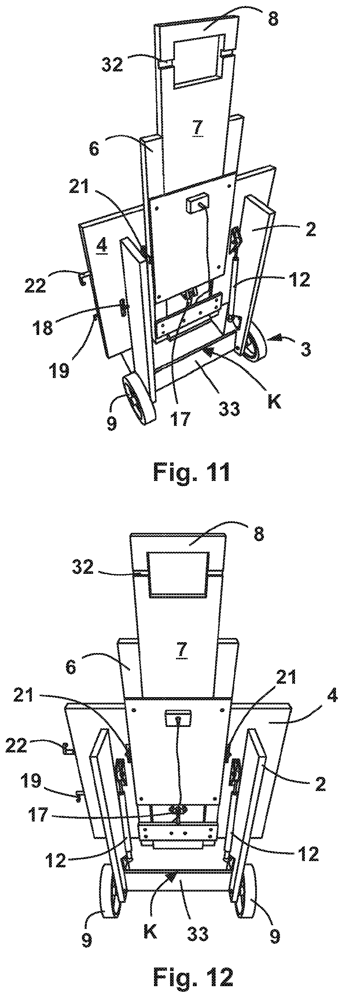

In Fig. 11 ist eine perspektivische Ansicht eines weiteren Ausführungsbeispiels der Vorrichtung 1 in der Transportstellung gezeigt. Hierbei ist zumindest ein Verbindungsstück der Stütze 6 großflächig ausgebildet und mit einer Schnur versehen. Durch diese Schnur kann die Stütze 6 besonders einfach von der Auflagefläche 4 gelöst und in die Tischstellung gebracht werden, insbesondere dann, wenn keine zweite Gasdruckfeder 17 vorgesehen ist. Darüber hinaus ist in dieser Darstellung erstmals ein erster Hebel 19 erkennbar. Dieser ermöglicht ein einfaches Betätigen des ersten Hakens, welcher zumindest teilweise in der Unterseite der Auflagefläche 4 verborgen ist und mit dem ersten Stift 20 am Hauptkörper 2 den ersten Verschluss 18 bildet. Analog betätigt ein zweiter Hebel 22 den zweiten Haken 23, um den zweiten Verschluss 21 zwischen Auflagefläche 4 und Stütze 6 zu öffnen oder zu schließen. Auch in diesem Ausführungsbeispiel sind die Rolleinheiten 3 als einfache Rollen 9 ausgeführt. Außerdem lässt sich die Vertiefung 32 des Verbindungsteils 7 analog zu jener der Fig. 8 im Koppelpunkt K formschlüssig mit dem Element 33 des Hauptkörpers 2 verbinden.

Fig. 12 zeigt eine perspektivische Ansicht der Vorrichtung 1 aus Fig. 11 in der Transportstellung. In dieser Darstellung sind die Anordnungen der zweiten Verschlüsse 21, der ersten Gasdruckfedern 12 und der Rollen 9 eindeutig ersichtlich. Darüber hinaus können die Dimensionen der Auflagefläche 4, der Stütze 6, des Hauptkörpers 2 und des Verbindungsteils 7 gut erkannt werden.

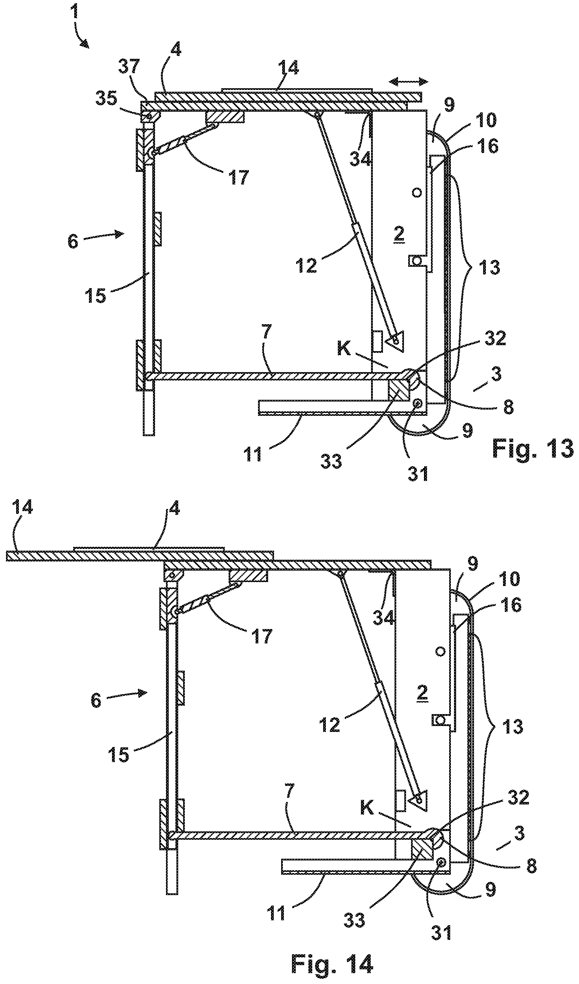

Fig. 13 und 14 zeigen eine weitere Ausführungsform einer erfindungsgemäßen Vorrichtung 1. Diese Ausführungsvariante unterscheidet sich von der beispielsweise in Fig. 6 dargestellten Ausführungsform dadurch, dass die Auflagefläche 4 nicht unmittelbar mit erster Schwenkachse 24 und zweiter Schwenkachse 25 verbunden ist, sondern mittelbar über eine untere Auflageplatte 37, mit welcher die Auflagefläche 4 translatorisch verschiebbar verbunden ist. Fig. 13 und 14 zeigen dabei beispielhaft zwei mögliche Relativpositionen von Auflagefläche 4 und unterer Auflageplatte 37, wobei die Auflagefläche 4 unterschiedliche Positionen relativ zum Hauptkörper 2 aufweist. Wie ersichtlich, ergibt sich dadurch eine ausziehbare Tischplatte der Vorrichtung 1 in der Tischposition, sodass die dann nutzbare untere Auflageplatte 37 vor dem Werkzeugkoffer, welcher hier nicht dargestellt ist, beispielsweise als Werkbank genutzt werden kann.

Um eine Relativbewegung von unterer Auflageplatte 37 und Auflagefläche 4 in der Transportstellung zu vermeiden, kann eine Verriegelung von Auflagefläche 4 und unterer Auflageplatte 37 in der Transportstellung vorgesehen sein, beispielsweise durch die Stütze 6 oder das Verbindungsteil 7, welches in der Transportstellung eine Relativbewegung zwischen Auflagefläche 4 und unterer Auflageplatte 37 verhindert. Mit einer erfindungsgemäßen Vorrichtung 1 kann ein Gegenstand 5, insbesondere ein Werkzeugkoffer, einfach transportiert und mit geringem Kraftaufwand und ohne Entfernen des Gegenstandes 5 von der Vorrichtung 1 eine Ablagefläche für diesen geschaffen werden.

## Patentansprüche

1. Vorrichtung (1) zum Transport eines Gegenstandes (5), insbesondere eines Werkzeugkoffers, umfassend einen Hauptkörper (2) mit einer Rolleinheit (3), wobei mit dem Hauptkörper (2) eine Auflagefläche (4) um eine erste Schwenkachse (24) schwenkbar verbunden ist, mit welcher Auflagefläche (4) der Gegenstand (5) verbindbar ist, wobei mit der Auflagefläche (4) eine Stütze (6) um eine zweite Schwenkachse (25) schwenkbar verbunden ist, wobei die Vorrichtung (1) von einer Transportstellung in eine Tischstellung bringbar ist, wobei ein Verbindungsteil (7) um eine dritte Schwenkachse (27) schwenkbar mit der Stütze (6) verbunden ist, **dadurch gekennzeichnet, dass** das Verbindungsteil (7) über einen am Hauptkörper (2) vorgesehenen Koppelpunkt (K) mit dem Hauptkörper (2) lösbar koppelbar ist, um die Vorrichtung (1) in der Tischstellung zu stabilisieren.

2. Vorrichtung (1) nach Anspruch 1, **dadurch gekennzeichnet, dass** die erste Schwenkachse (24), die zweite Schwenkachse (25) und die dritte Schwenkachse (27) im Wesentlichen parallel sind.

3. Vorrichtung (1) nach Anspruch 1 oder 2, **dadurch gekennzeichnet, dass** die Auflagefläche (4), vorzugsweise zulaufende, Schienen (14) aufweist, wobei die Auflagefläche (4) derart aufgebaut ist, dass korrespondierende, vorzugsweise zulaufende, Schienen des Gegenstandes (5) in jene der Auflagefläche (4) einschiebbar sind, um den Gegenstand (5) lösbar auf der Auflagefläche (4) zu fixieren, insbesondere formschlüssig.

4. Vorrichtung (1) nach einem der Ansprüche 1 bis 3, **dadurch gekennzeichnet, dass** die Stütze (6) eine Führung (15) aufweist, in welcher das Verbindungsteil (7) zumindest bereichsweise angeordnet und entlang einer Längsachse der Stütze (6) translatorisch verschiebbar ist.

5. Vorrichtung (1) nach einem der Ansprüche 1 bis 3, **dadurch gekennzeichnet, dass** eine erste Verbindungslinie (26) zwischen der ersten Schwenkachse (24) und der zweiten Schwenkachse (25), eine zweite Verbindungslinie (28) zwischen der ersten Schwenkachse (24) und dem Koppelpunkt (K), eine dritte Verbindungslinie (29) zwischen dem Koppelpunkt (K) und der dritten Schwenkachse (27) sowie eine vierte Verbindungslinie (30) zwischen der dritten Schwenkachse (27) und der zweiten Schwenkachse (25) in einer Seitenansicht der Tischstellung im Wesentlichen in viereckiger Form angeordnet sind, wobei bevorzugt vorgesehen ist, dass die erste Verbindungslinie (26) mit der zweiten Verbindungslinie (28) in der Tischstellung einen ersten Winkel (α) von zumindest 90 Grad einschließt, wobei vorzugsweise ein Anschlag (36) vorgesehen ist, durch welchen eine Schwenkbewegung der Auflagefläche (4) begrenzt ist, sodass der erste Winkel (α) maximal 135 Grad, insbesondere maximal 100 Grad, bevorzugt maximal 95 Grad, beträgt.

6. Vorrichtung (1) nach Anspruch 5 , **dadurch gekennzeichnet, dass** die erste Verbindungslinie (26) kleiner als die dritte Verbindungslinie (29) ist, sodass sich in der Tischstellung eine Trapezform der ersten Verbindungslinie (26), der zweiten Verbindungslinie (28), der dritten Verbindungslinie (29) und der vierten Verbindungslinie (30) ergibt.

7. Vorrichtung (1) nach einem der Ansprüche 1 bis 6, **dadurch gekennzeichnet, dass** zumindest eine erste Gasdruckfeder (12) vorgesehen ist, welche den Hauptkörper (2) mit der Auflagefläche (4) verbindet und ein Moment um die erste Schwenkachse (24) auf die Auflagefläche (4) aufbringt, um einen Wechsel von der Transportstellung in die Tischstellung zu unterstützen.

8. Vorrichtung (1) nach Anspruch 7, **dadurch gekennzeichnet, dass** die erste Gasdruckfeder (12) zum Anheben der Auflagefläche (4) samt einer daran angebrachten Masse von 1 kg bis 50 kg, bevorzugt von 5 kg bis 40 kg, besonders bevorzugt von 15 kg bis 30 kg, von einer vertikalen Stellung in eine horizontale Stellung ausgebildet ist, um die Auflagefläche (4) von der Transportposition in die Tischposition zu bringen.

9. Vorrichtung (1) nach einem der Ansprüche 1 bis 8, **dadurch gekennzeichnet, dass** eine zweite Gasdruckfeder (17) zwischen der Auflagefläche (4) und der Stütze (6) angeordnet ist, durch welche ein Moment um die zweite Schwenkachse (25) auf die Stütze (6) aufbringbar ist, um ein Ausklappen der Stütze (6) in die Tischstellung zu unterstützen.

10. Vorrichtung (1) nach einem der Ansprüche 1 bis 9, **dadurch gekennzeichnet, dass** der Hauptkörper (2) bodenseitig eine Schaufel (11) aufweist, wobei ein Schwerpunkt der Vorrichtung (1) in der Tischstellung über der Schaufel (11) lokalisiert ist, um ein Kippen der Vorrichtung (1) mittels der Schaufel (11) zu verhindern.

11. Vorrichtung (1) nach einem der Ansprüche 1 bis 10, **dadurch gekennzeichnet, dass** Hauptkörper (2), Auflagefläche (4), Stütze (6) und/oder Verbindungsteil (7) zumindest bereichsweise aus Holz, Metall oder Kunststoff gebildet sind.

12. Vorrichtung (1) nach einem der Ansprüche 1 bis 11, **dadurch gekennzeichnet, dass** die Auflagefläche (4) relativ zur ersten Schwenkachse (24) translatorisch verschiebbar ist, vorzugsweise parallel zu einer Ebene, in welcher die erste Schwenkachse (24) und/oder die zweite Schwenkachse (25) liegen.

13. Vorrichtung (1) nach Anspruch 12, **dadurch gekennzeichnet, dass** eine unter der Auflagefläche (4) angeordnete Auflageplatte (37) vorgesehen ist, welche durch ein Verschieben der Auflagefläche (4) in der Tischstellung relativ zu erster Schwenkachse (24) und zweiter Schwenkachse (25) freigebbar ist, um eine zusätzliche Auflage zu bilden.

14. Vorrichtung (1) nach Anspruch 13, **dadurch gekennzeichnet, dass** ein Mechanismus vorgesehen ist, durch welchen die Auflagefläche (4) mit der unteren Auflageplatte (37) lösbar koppelbar bzw. verriegelbar ist, um eine Verschiebbarkeit bei Bedarf zu blockieren.

15. Set zum Transport eines Gegenstandes (5), insbesondere eines Werkzeugkoffers, umfassend den Gegenstand (5) und eine Vorrichtung (1) nach einem der Ansprüche 1 bis 14, wobei der Gegenstand (5) mit der Auflagefläche (4) lösbar verbindbar ist, wobei bevorzugt vorgesehen ist, dass der Gegenstand (5) und die Auflagefläche (4) mit korrespondierenden Aufnahmen versehen sind, welche vorzugsweise formschlüssig miteinander verbindbar sind, wobei insbesondere vorgesehen ist, dass eine lösbare Verbindung (16) zwischen dem Gegenstand (5) und der Auflagefläche (4) durch eine Translationsbewegung des Gegenstandes (5) relativ zur Auflagefläche (4) herstellbar ist.

## Claims

1. A device (1) for transporting an object (5), particularly a tool box, comprising a main body (2) with a roller unit (3), wherein a bearing surface (4) is connected to the main body (2) so as to be pivotable about a first pivoting axis (24) and the object (5) can be connected to said bearing surface (4), wherein a support (6) is connected to the bearing surface (4) so as to be pivotable about a second pivoting axis (25), wherein the device (1) can be moved from a transport position into a table position, and wherein a connecting part (7) is connected to the support (6) so as to be pivotable about a third pivoting axis (27), **characterized in that** the connecting part (7) can be separably coupled to the main body (2) by means of a coupling point (K) provided on the main body (2) in order to stabilize the device (1) in the table position.

2. The device (1) according to claim 1, **characterized in that** the first pivoting axis (24), the second pivoting axis (25) and the third pivoting axis (27) essentially are parallel.

3. The device (1) according to claim 1 or 2, **characterized in that** the bearing surface (4) preferably has converging rails (14), wherein the bearing surface (4) is constructed in such a way that corresponding and preferably converging rails of the object (5) can be inserted into those of the bearing surface (4) in order to separably fix the object (5) on the bearing surface (4), particularly in a form-fitting manner.

4. The device (1) according to one of claims 1 to 3, **characterized in that** the support (6) has a guide (15), in which the connecting part (7) is arranged at least regionally and displaceable along a longitudinal axis of the support (6) in a translatory manner.

5. The device (1) according to one of claims 1 to 3, **characterized in that** a first connecting line (26) between the first pivoting axis (24) and the second pivoting axis (25), a second connecting line (28) between the first pivoting axis (24) and the coupling point (K), a third connecting line (29) between the coupling point (K) and the third pivoting axis (27) and a fourth connecting line (30) between the third pivoting axis (27) and the second pivoting axis (25) essentially are arranged in a quadrangular shape in a side view of the table position, wherein the first connecting line (26) and the second connecting line (28) preferably include a first angle (α) of at least 90 degrees in the table position, and wherein a stop (36) preferably is provided in order to limit a pivoting motion of the bearing surface (4) such that the first angle (α) amounts to no more than 135 degrees, particularly no more than 100 degrees, preferably no more than 95 degrees.

6. The device (1) according to claim 5, **characterized in that** the first connecting line (26) is smaller than the third connecting line (29) such that the first connecting line (26), the second connecting line (28), the third connecting line (29) and the fourth connecting line (30) form a trapezoidal shape in the table position.

7. The device (1) according to one of claims 1 to 6, **characterized in that** at least one first pneumatic spring (12) is provided, wherein said first pneumatic spring connects the main body (2) to the bearing surface (4) and exerts a torque about the first pivoting axis (24) upon the bearing surface (4) in order to promote a change from the transport position into the table position.

8. The device (1) according to claim 7, **characterized in that** the first pneumatic spring (12) is designed for raising the bearing surface (4) including a mass of 1 kg to 50 kg, preferably 5 kg to 40 kg, particularly 15 kg to 30 kg, which is affixed to the bearing surface, from a vertical position into a horizontal position in order to move the bearing surface (4) from the transport position into the table position.

9. The device (1) according to one of claims 1 to 8, **characterized in that** a second pneumatic spring (17) is arranged between the bearing surface (4) and the support (6) and makes it possible to exert a torque about the second pivoting axis (25) upon the support (6) in order to promote a fold-out motion of the support (6) into the table position.

10. The device (1) according to one of claims 1 to 9, **characterized in that** the main body (2) has a blade (11) on its bottom side, wherein a center of gravity of the device (1) is located above the blade (11) in the table position in order to prevent tilting of the device (1) by means of the blade (11).

11. The device (1) according to one of claims 1 to 10, **characterized in that** the main body (2), the bearing surface (4), the support (6) and/or the connecting part (7) are at least regionally made of wood, metal or plastic.

12. The device (1) according to one of claims 1 to 11, **characterized in that** the bearing surface (4) can be displaced relative to the first pivoting axis (24) in a translatory manner, preferably parallel to a plane, in which the first pivoting axis (24) and/or the second pivoting axis (25) lie.

13. The device (1) according to claim 12, **characterized in that** a bearing plate (37) is provided and arranged underneath the bearing surface (4), wherein said bearing plate can be released in the table position by displacing the bearing surface (4) relative to the first pivoting axis (24) and the second pivoting axis (25) in order to form an additional bearing structure.

14. The device (1) according to claim 13, **characterized in that** a mechanism is provided, by means of which the bearing surface (4) can be separably coupled to or interlocked with the lower bearing plate (37) in order to block a displaceability as needed.

15. A set for transporting an object (5), particularly a tool box, comprising the object (5) and a device (1) according to one of claims 1 to 14, wherein the object (5) can be separably connected to the bearing surface (4), wherein the object (5) and the bearing surface (4) preferably are provided with corresponding receptacles that preferably can be connected to one another in a form-fitting manner, and wherein a separable connection (16) between the object (5) and the bearing surface (4) particularly can be produced by means of a translatory motion of the object (5) relative to the bearing surface (4).

## Revendications

1. Dispositif (1), destiné au transport d'un objet (5), notamment d'une mallette à outils, comprenant un corps principal (2) pourvu d'une unité roulante (3), une surface de dépose (4), avec laquelle surface de dépose (4) l'objet (5) peut être assemblé étant assemblée de manière à pouvoir pivoter autour d'un premier axe de pivotement (24) avec le corps principal (2), un support (6) étant assemblé avec la surface de dépose (4) de manière à pouvoir pivoter autour d'un deuxième axe de pivotement (25), le dispositif (1) pouvant être amené d'une position de transport dans une position formant table, une pièce d'assemblage (7) étant assemblée de manière à pouvoir pivoter autour d'un troisième axe de pivotement (27) avec le support (6), **caractérisé en ce que** la pièce d'assemblage (7) est susceptible d'être accouplée de manière amovible avec le corps principal (2) par l'intermédiaire d'un point d'accouplement (K) prévu sur le corps principal (2), pour stabiliser le dispositif (1) dans la position formant table.

2. Dispositif (1) selon la revendication 1, **caractérisé en ce que** le premier axe de pivotement (24), le deuxième axe de pivotement (25) et le troisième axe de pivotement (27) sont sensiblement parallèles.

3. Dispositif (1) selon la revendication 1 ou 2, **caractérisé en ce que** la surface de dépose comporte des rails (14), de préférence convergents, la surface de dépose (4) étant structurée de telle sorte que des rails correspondants, de préférence convergents de l'objet (5) soient insérables dans ceux de la surface de dépose (4), pour fixer l'objet (5) de manière amovible sur la surface de dépose (4), notamment par complémentarité de forme.

4. Dispositif (1) selon l'une quelconque des revendications 1 à 3, **caractérisé en ce que** le support (6) comporte un guidage (15), dans lequel la pièce d'assemblage (7) est placée au moins par endroits et est déplaçable en translation le long d'un axe longitudinal du support (6).

5. Dispositif (1) selon l'une quelconque des revendications 1 à 3, **caractérisé en ce que** dans une vue latérale de la position formant table, une première ligne d'assemblage (26) entre le premier axe de pivotement (24) et le deuxième axe de pivotement (25), une deuxième ligne d'assemblage (28) entre le premier axe de pivotement (24) et le point d'accouplement (K), une troisième ligne d'assemblage (29) entre le point d'accouplement (K) et le troisième axe de pivotement (27), ainsi qu'une quatrième ligne d'assemblage (30) entre le troisième axe de pivotement (27) et le deuxième axe de pivotement (25) sont placées en une forme sensiblement carrée, étant prévu de préférence que dans la position formant table, la première ligne d'assemblage (26) inclue avec la deuxième ligne d'assemblage (28) un premier angle (α) d'au moins 90 degrés, de préférence étant prévue une butée (36), par laquelle un déplacement en pivotement de la surface de dépose (4) est limité, de telle sorte que le premier angle (α) s'élève à un maximum de 135 degrés, notamment à un maximum de 100 degrés, de manière préférentielle à un maximum de 95 degrés.

6. Dispositif (1) selon la revendication 5, **caractérisé en ce que** la première ligne d'assemblage (26) est plus petite que la troisième ligne d'assemblage (29), de telle sorte que dans la position formant table, il résulte une forme trapézoïdale de la première ligne d'assemblage (26), la deuxième ligne d'assemblage (28), la troisième ligne d'assemblage (29) et la quatrième ligne d'assemblage (30).

7. Dispositif (1) selon l'une quelconque des revendications 1 à 6, **caractérisé en ce qu'**il est prévu au moins un premier ressort de pression à gaz (12), lequel assemble le corps principal (2) avec la surface de dépose (4) et applique un couple autour du premier axe de pivotement (24) sur la surface de dépose (4), pour assister un changement de la position de transport dans la position formant table.

8. Dispositif (1) selon la revendication 7, **caractérisé en ce que** le premier ressort de pression à gaz (12) est conçu pour relever la surface de dépose (4) avec une masse montée sur celle-ci de 1 kg à 50 kg, de manière préférentielle de 5 kg à 40 kg, de manière particulièrement préférentielle de 15 kg à 30 kg d'une position verticale dans une position horizontale, pour amener la surface de dépose (4) de la position de transport dans la position formant table.

9. Dispositif (1) selon l'une quelconque des revendications 1 à 8, **caractérisé en ce qu'**un deuxième ressort de pression à gaz (17), par lequel un couple autour du deuxième axe de pivotement (25) est applicable sur le support (6) est placé entre le surface de dépose (4) et le support (6), pour assister un déploiement du support (6) dans la position formant table.

10. Dispositif (1) selon l'une quelconque des revendications 1 à 9, **caractérisé en ce que** du côté du fond inférieur, le corps principal (2) comporte une pelle (11), un centre de gravité du dispositif (1) dans la position formant table étant localisé par l'intermédiaire de la pelle (11), pour empêcher un basculement du dispositif (1) au moyen de la pelle (11).

11. Dispositif (1) selon l'une quelconque des revendications 1 à 10, **caractérisé en ce que** le corps principal (2), la surface de dépose (4), le support (6) et /ou la pièce d'assemblage (7) sont constitués au moins par endroits en bois, en métal ou en matière plastique.

12. Dispositif (1) selon l'une quelconque des revendications 1 à 11, **caractérisé en ce que** la surface de dépose (4) est déplaçable en translation par rapport au premier axe de pivotement (24), de préférence à la parallèle d'un plan dans lequel se situent le premier axe de pivotement (24) et / ou le deuxième axe de pivotement (25).

13. Dispositif (1) selon la revendication 12, **caractérisé en ce qu'**il est prévu une plaque de dépose (37) placée sous la surface de dépose (4), laquelle est libérable par un déplacement de la surface de dépose (4) dans la position formant table par rapport au premier axe de pivotement (24) et au deuxième axe de pivotement (25), pour constituer une dépose supplémentaire.

14. Dispositif (1) selon la revendication 13, **caractérisé en ce qu'**il est prévu un mécanisme, par lequel la surface de dépose (4) peut se coupler ou se verrouiller de manière amovible avec la plaque de dépose (37) inférieure, pour bloquer en cas de besoin une aptitude au déplacement.

15. Kit, destiné à transporter un objet (5), notamment une mallette à outils, comprenant l'objet (5) et un dispositif (1) selon l'une quelconque des revendications 1 à 14, l'objet (5) pouvant s'assembler de manière amovible avec la surface de dépose (4), étant prévu de manière préférentielle que l'objet (5) et la surface de dépose (4) soient munis de logements correspondants, lesquels sont susceptibles d'être assemblés les uns avec les autres préférence par complémentarité de forme, étant prévu notamment qu'un assemblage (16) amovible puisse être établi entre l'objet (5) et la surface de dépose (4) par un mouvement en translation de l'objet (5) par rapport à la surface de dépose (4).
